(19) Europäisches Patentamt
European Patent Office
Office européen des brevets

(11) EP 1 509 014 A2

(12) **EUROPEAN PATENT APPLICATION**

(43) Date of publication:
**23.02.2005 Bulletin 2005/08**

(51) Int Cl.⁷: **H04L 12/58**, G06F 17/60

(21) Application number: **04254911.3**

(22) Date of filing: **16.08.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **19.08.2003 GB 0319471**

(71) Applicant: **SOPHOS PLC**
**Abingdon, Oxfordshire OX14 3YP (GB)**

(72) Inventors:
- **Warren-Smith, Rodney Frederick, Sophos Plc**
  **Abingdon OX14 3YP (GB)**
- **Szalay, Akos, Sophos Plc**
  **Abingdon OX14 3YP (GB)**

(74) Representative: **Beresford, Keith Denis Lewis**
**BERESFORD & Co.**
**16 High Holborn**
**London WC1V 6BX (GB)**

(54) **Method and apparatus for filtering electronic mail**

(57) An authorisation server (11) is provided which attempts to classify messages as being wanted or unwanted messages. If a message is classified as an unwanted message it is stored in a black inbox (18) as part of an archive of unwanted messages. If a message is classified as a wanted message it is sent to a user's grey inbox (19) where the message can be reviewed. For messages whose status as a wanted or unwanted message is unclear the authorisation server (11) delays dispatch of such a message so that the message's status can be reassessed using additional information received about similar messages. This further information is received either from honey pot computers (12,13) set up to receive unsolicited messages and also from user rejection of similar messages previously dispatched to users' grey inboxes (19) during the period of delay.

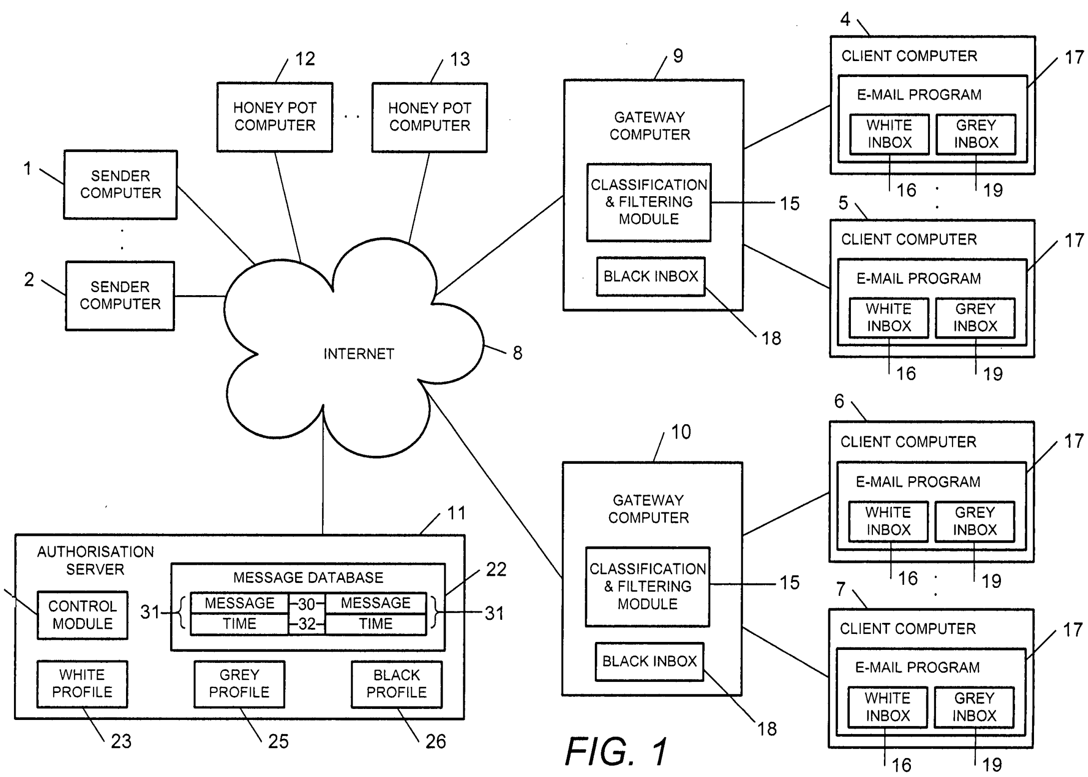


FIG. 1

EP 1 509 014 A2

Printed by Jouve, 75001 PARIS (FR)

## Description

The present application relates to methods and apparatus for filtering electronic mail. Embodiments of the present invention concern the filtering of unsolicited electronic mail messages sent across the Internet.

Email and the Internet provide a very convenient way by which messages may be sent from one computer to another. The convenience of email has given rise to a new problem, the sending of multiple copies of unwanted messages in the form of advertising or solicitation. Such unwanted email is colloquially known as "spam".

Although it is relatively easy to generate and send multiple copies of an email, sending multiple copies of an unwanted email gives rise to problems for individuals who download the unwanted messages in the form of additional connection charges and time spent distinguishing useful messages from unwanted messages.

In order to overcome problems caused by unwanted email messages, a number of electronic mail filters have been proposed.

Thus for example, many email programs such as Microsoft Outlook(™) allow rules to be set up for filtering incoming mail according to simple criteria, such as sender address, subject line etc. Although user input rules can be tailored to reflect an individual user's preferences, such rule based filtering systems can be outwitted by senders of unsolicited messages who tailor their messages to make the messages appear genuine. Furthermore setting up and maintaining effective rule based filtering systems is difficult because the rules need to be quite complex if they are to be effective.

A more sophisticated email filter is the SpamAssassin(™) program available from Deersoft Inc. The SpamAssassin(™) program uses a wide range of heuristic tests on email headers and body text to identify unsolicited commercial email. The SpamAssassin(™) program also stores a list of email addresses of known senders of unsolicited commercial mail. When a message is identified as spam through textual analysis or alternatively because a sender's address corresponds to an address of a known sender of unsolicited commercial email, the message is assigned a score. A user or a system administrator can then decide whether or not to block delivery of the message based on the assigned score.

Another commercially available email filtering program is the Mail Washer(™) program. In a similar way to the SpamAssassin(™) program, this program also stores a list of known senders of unsolicited emails and also performs heuristic analysis of email messages. Additionally the Mail Washer(™) program enables a list of acceptable addresses to be stored so that all email from acceptable addresses is automatically delivered regardless of their content.

Although available email filtering programs can be relatively successful at filtering email, it is desirable to improve the ability of such programs to distinguish between wanted and unwanted messages.

In accordance with one aspect of the present invention there is provided a method of handling electronic messages comprising the steps of:

receiving an electronic message;
classifying a received message as either a wanted message, an unwanted message or a message of uncertain status; and
for at least some of received messages classified as messages of uncertain status delaying dispatch of said messages and reclassifying said messages as either wanted or unwanted messages utilising information received during said delay.

In accordance with another aspect of the present invention there is provided an apparatus for handling electronic messages comprising:

a receiver operable to receive electronic messages;
a classification unit operable to classify electronic messages received by said receiver as wanted or unwanted messages; and
a dispatch unit responsive to the classification of messages as wanted or unwanted messages to dispatch messages to a destination based on the classification of said messages by said classification unit;

characterised in that:

said classification unit is operable to classify a message as either being a wanted message, an unwanted message or a message of uncertain status, wherein said classification unit is responsive to classification of a message as a message of uncertain status to reassess the classification of a said message after a delay.

Further aspects and embodiments of the present invention will become apparent from the following description with reference to the accompanying drawings in which:

Figure 1 is a block diagram of a network of computers embodying an email filtering system in accordance with a first embodiment of the present invention;
Figures 2A and B are a flow diagram of the processing of messages performed by an authorisation server included in the network of computers of Figure 1;
Figures 3A-C are an illustrative example of an email message being processed by the authorisation server to generate a list of token numbers representative of the content of the message;
Figure 4 is a flow diagram of the processing performed by the authorisation server to generate a list of token numbers representative of the content of a received message;
Figure 5 illustrates a pair of histograms representative of data stored within the authorisation server of Figure 1 for calculating a spam score for a message;
Figure 6 is a flow diagram of the processing performed by the authorisation server to determine a spam score representative of the likelihood of a message being an unwanted message;
Figure 7 is a flow diagram of the processing performed by an email program stored in a client computer included in the network of computers of Figure 1;
Figures 8A-C are schematic illustrations of user interfaces generated by an email program stored on a client computer included in the network of computers of Figure 1;
Figure 9 is a block diagram of a network of computers embodying an email filtering system in accordance with a second embodiment of the present invention;
Figure 10 is a flow diagram of the processing performed by the authorisation server included in the network of computers of Figure 9;
Figure 11 is a block diagram of a clustering module stored in the memory of the authorisation server of Figure 9;
Figures 12A and B are a flow diagram of the processing performed by the clustering module of Figure 11; and
Figure 13 is a block diagram of a computer network embodying an email filtering system in accordance with a third embodiment of the present invention.

## First Embodiment

Referring to Figure 1, a number of sender computers 1,2 are connected to a number of client computers 4, 5, 6, 7 via the Internet 8 and a number of gateway computers 9,10. Also connected to the Internet 8 is an authorisation server 11 for identifying wanted and unwanted messages and a number of computers 12,13 for receiving unsolicited messages (hereinafter referred to as honey pot computers 12,13).

As will be described, the authorisation server 11 classifies messages with improved accuracy. This improved classification of messages is achieved by the authorisation server 11 performing a two stage classification process. A message is initially tested to see if it is very likely to be a wanted message or an unwanted message. If this is the case the message can then be dealt with appropriately. For messages whose status as a wanted or unwanted message is unclear, the authorisation server 11 then can choose to delay dispatch of such a message so that the message's status can be reassessed using additional information received about similar messages.

In this embodiment, further information for classifying a message is received from two sources. Firstly, the honey pot computers 12,13 each comprise email addresses set up for the purpose of attracting unsolicited messages. Since no legitimate messages should ever be sent to the honey pot computers 12,13 such messages can automatically be classified as being unwanted and forwarded to the authorisation server 11. Secondly, whenever a user rejects a received message, this also enables the authorisation server 11 to know with certainty that a rejected message was an unwanted message and hence this information can also be used to identify other unwanted messages.

As more information is constantly being received about unwanted messages, by delaying dispatch of messages which can not be classified with certainty, improved classification of borderline cases can therefore be achieved.

## Overview of Processing of a Message

An overview of the processing of a message by the filtering system in this embodiment will now be described.

When an email message for one of the client computers 4;5;6;7 is sent from a sender computer 1;2, the message is routed via the Internet 8 to a gateway computer 9;10. When the message reaches the gateway computer 9;10 a classification and filtering module 15 provided on the gateway computer 9;10 makes an initial simple determination as to whether the message is clearly a wanted or unwanted message. This initial simple determination could be of the form of, for example, checking the senders address against a stored list of acceptable and unacceptable addresses. This initial filtering reduces the number of messages which are subjected to detailed analysis.

If the classification and filtering module 15 determines that a message is clearly a wanted message, the message is sent for storage in an inbox 16 for storing wanted messages (hereinafter referred to as a white inbox 16) provided as part of an email program 17 stored within the memory of the client computer 4;5;6;7 for which the message is intended. If the classification and filtering module 15 determines that a received message is clearly an unwanted message, the classification and filtering module 15 stores the message in an inbox 18 on the gateway computer 9;10 as part of an archive of filtered undelivered messages (hereinafter referred to as a black inbox 18).

Messages which are not stored by the classification and filtering module 15 in either the white inbox 16 of an email program 17 on a client computer 4;5;6;7 or alternatively in a black inbox 18 provided on the gateway computer 9;10 are sent by the classification and filtering module 15 via the Internet 8 to the authorisation server 11 for further analysis.

When a message is received by the authorisation server 11, the authorisation server 11 processes the received message to determine a spam score for the message indicative of the probability of the received message being a wanted or unwanted message. The calculated spam score is then used to either cause the authorisation server 11 to send the message to a user's black inbox 18 in the case of messages which are determined to be unwanted messages or to an inbox 19, (hereinafter referred to as a grey inbox 19) included as part of the email program 17 on the client computer 4;5;6;7 to which the message is addressed.

In this embodiment in order to enable spam scores to be determined for messages, a control module 20 for co-ordinating the processing of messages; and a message database 22 for storing copies of messages received by the authorisation server 11 are stored on the authorisation server 11. Also stored on the authorisation server 11 are three sets of profile data (hereinafter referred to as a white profile 23, a grey profile 25 and a black profile 26) each comprising stored data indicative of the frequency with which different words and phrases appear in different categories of messages received by the authorisation server 11.

More specifically, the white profile 23 comprises data identifying the frequency with which different words and phrases appear in messages dispatched for storage in any of the grey inboxes 19 on any of the client computers 4,5,6,7 which have not been rejected by users. The grey profile 25 comprises data identifying the frequency with which different words and phrases appear in messages recently dispatched for storage in any of the grey inboxes 19 on the client computers 4,5,6,7. Finally, the black profile 26 comprises data identifying the frequency with which different words and phrases appear in messages forwarded from any of the honey pot computers 12,13 and messages sent to the client computers 4,5,6,7 which were subsequently rejected by users.

There will always be some delay between the dispatch of a message by the authorisation server 11 and the time at which the message is eventually reviewed by a user. As will be described later, storing a white profile 23 and a grey profile 25 enables the authorisation server 11 to determine estimates of the frequencies with which different words and phrases appear in messages which will or have been reviewed by users and not rejected. Using this information together with the data stored in the black profile 26, a determination of the probability of a message containing particular words and phrases being a wanted or unwanted message can be made.

When a message from a gateway computer 9;10 is received by the authorisation server 11, the control module 20 causes a copy of the received message 30 to be stored as part of a message record 31 in the message database 22 together with a time stamp 32 identifying the time of receipt of the message. The control module 20 then utilises the stored white, grey and black profile data 23,25,26 to generate a spam score for the received message.

If the authorisation server 11 can generate a spam score for a message which enables the message to be classified definitely as a wanted or unwanted message, the message is dispatched to either a user's grey inbox 19 or a black inbox 18 stored on the gateway computer 9;10 respectively. In contrast, messages which can not be clearly classified as either being wanted or unwanted are not automatically dispatched. Rather the control module 20 utilises the grey profile 25 to determine whether more information about similar messages previously dispatched to any of the grey inboxes 19 is likely to be received which would enable the authorisation server 11 to make a positive determination of whether the message is a wanted or unwanted message within a maximum delay period. If this is the case the control module delays dispatching a copy of the message.

During the delay period the authorisation server 11 will receive further information about similar messages as a result of the receipt of similar messages by the honey pot computers 12,13 and also by the rejection of similar messages by users viewing messages recently dispatched and stored in their grey inboxes 19. The messages received by the honey pot computers 12,13 and the messages rejected by users utilising the email program 17 are used to update the white profile 23, grey profile 25 and black profile 26. During the delay period the authorisation server 11 reassesses whether a message stored in the message database 22 can now be identified as either being very likely to be an unwanted or a wanted message and hence dispatched to either a black inbox 18 or a user's grey inbox 19.

Whenever the authorisation server 11 determines that either too long a delay will be required to wait for more information about similar messages in order to definitely classify a received message, or alternatively after the dispatch of a message has been delayed for the set maximum time period, the authorisation server 11 forwards a copy of the delayed message to a user's grey inbox 19 for review by a user. If the message is in fact an unwanted message the user can then cause the email program 17 to send a control signal back to the authorisation server 11 so that the authorisation server 11 can update the white profile 23, grey profile 25 and black profile 26 to improve the later classification of similar messages.

Processing of Messages Performed by Authorisation Server

The processing of messages by the authorisation server 11 will now be described in greater detail with reference to Figures 2A and B, 3A-C, 4, 5 and 6.

Referring to Figures 2A and B which are a flow diagram of the processing performed by the authorisation server 11, when a message from a gateway computer 9;10 is received by the authorisation server 11, a copy of the message 30 is stored (S2-1) as part of a message record 31 within the message database 22 together with a time stamp 32 indicating the time of receipt of the message by the authorisation server 11.

After a copy of the message 30 has been stored, the control module 20 then processes the received message (S2-2) to generate a list of token numbers indicative of the content of the message. This processing will now be described in detail with reference to Figures 3A-C which are an illustrative example of a message being processed, and Figure 4 which is a flow diagram of the processing performed by the control module 20.

As is shown in Figure 3A an email message conventionally comprises a sender's address 40, a recipient's address 41, a subject line 42 and body text 43.

Referring to Figure 4 in this embodiment, a received message is initially processed (S4-1) to delete from the message subject line 42 and body text 43 any portions of the subject line 42 and body text 43 which are written in a form which would cause those portions not to be displayed to a user.

Many senders of unwanted messages attempt to disguise the content of their messages by including additional text in their messages which is arranged so that it is not displayed to a user. This can be achieved by, for example, displaying the portions of text in the same colour as the background of a message, or alternatively by including text which is shown in a script with the font size set to zero. Since the inclusion of such text is intended to attempt to hamper classification systems, as an initial step whenever such non displayed text is identified within the subject line 42 and body text 43 it is deleted so that it does not affect subsequent classification.

After any undisplayed text has been deleted from the subject line 42 and body text 43, the control module 20 (S4-3) generates additional copies of the subject line 42 and body text 43 from which punctuation marks have been removed. In this embodiment this process is performed twice, once to produce further copies of the subject line and body text from which all punctuation marks except for hyphen and underscore have been removed, and then again replacing the punctuation marks, hyphen and underscore with spaces.

As a result of the processing performed by the control module 20 the original message received by the authorisation server 11 will be expanded to include multiple copies of the subject line 42 and body text 43 where each of the copies differs slightly in terms of the presence and absence of different types of punctuation. Figure 3B is an exemplary illustration of the message of Figure 3A after this processing.

This expanded message is then (S4-4) processed to identify for each series of characters in the message separated by spaces, alphabetic characters and other characters. Further copies of the subject line 42 and body text 43 where spaces are introduced at the boundaries between alphabetic characters and other characters are then added to the message.

The control module 20 then (S4-5) takes each word comprising a set of characters which begins or ends with a space symbol or a punctuation mark in the expanded message and generates a check sum for that set of characters utilising the known Adler 32 check sum algorithm. This processing generates a 32 bit number which is dependent upon the selected characters. The series of characters extracted do not have to be limited to letters and numbers so for example strings comprising control characters like tab and carriage returns could be extracted or alternatively series of multiple spaces could be extracted. This helps in classifying messages as such strings of characters for generating white space such as strings of tabs or carriage returns occur with high frequency within unsolicited messages.

The control module 20 then stores as a token number for the selected string the 20 least significant bits of this generated 32 bit number. By processing the expanded message in this way, each series of characters separated by spaces or punctuation marks is assigned a token number in a repeatable manner. The generated list of token numbers is therefore representative of the strings of characters representing words in the message and hence the content of the message.

Additionally, at this stage, a representation of each of the extracted strings from the case sensitive portions of the message, such as the subject line 42 and body text 43 is then processed to generate a corresponding string in which all letters appear in upper case. A token number for the generated string is then calculated in the same way as has previously been described. If this token number differs from the token number generated for the unprocessed string, the newly generated token number is added to the current list of token numbers.

Thus in this way, each of the extracted strings is processed and for the case sensitive portions of the message which include both upper and lower case letters, token numbers for the strings both as a mixture of upper and lower case letters and as a string including only upper case letters is stored.

After a list of token numbers for individual words in a message have been generated and stored (S4-5), the control module 20 then (S4-6) proceeds to divide the expanded text of the message in to a series of overlapping phrases.

In this embodiment this is achieved by the control module 20 identifying as anchor words within the text all the strings of characters which resulted in the generation of token numbers less than 300,000. In practice, this means that approximately 30% of the strings will be identified as anchor words.

The control module 20 then proceeds to utilise the identified anchor words to divide the message into a series of overlapping phrases. This is achieved by the control module 20 extracting as a first phrase the text running from the beginning of the message and ending with the third identified anchor word.

The next phrase running from the first word after the first anchor word and ending with the fourth anchor word is then extracted. Then the next phrase running from the word following the second anchor word and ending with the fifth anchor word would be extracted. This is repeated until the end of the message is reached. For each of the extracted phrases, a token number is generated using the Adler 32 check sum algorithm to process the phrase and a token number comprising the 20 least significant bits of the generated 32 bit number is stored.

Again, as has previously been described, each extracted string from the case sensitive portions of the message is processed to generate a corresponding a string in which all letters are in upper case and a token number for the processed string is stored if this token number differs from the token number for the unprocessed version of the string.

Figure 3C is a schematic illustration of a sample of extracted words and phrases and associated token numbers for the message of Figure 3A. As can be seen from Figure 3C by processing the message in the manner described a list of token numbers is obtained which is an encoding of the words and phrases and other strings such as strings for generating white space and strings identifying the sender's and recipient's address contained within the message. Furthermore due to the processing of messages to generate multiple copies of messages in different formats with punctuation excluded, the generated list of token numbers will include numbers which are unaffected by small random differences in terms of punctuation and case etc. to the text of the message which may be introduced by a sender of a message trying to confuse a classification system.

Returning to Figure 2A after a list of token numbers for a message has been generated, the control module 20 calculates (S2-3) a spam score for the message utilising the generated list of token numbers and the stored white profile 23, grey profile 25 and black profile 26 data as will now be described in detail with reference to Figures 5 and 6.

In this embodiment where the token numbers range between zero and $2^{20}$, the white profile 23, grey profile 25 and black profile 26 each consist of a series of $2^{20}$ data entries, one in each profile for each of the possible token numbers which can be assigned to a word or phrase.

Whenever a message is received by the authorisation server 11, a list of token numbers for the message is generated by the control module 20. As will be described, whenever a message is dispatched by the authorisation server 11 to a user's grey inbox 19, the control module 20 takes each token number in the list for the message in turn and causes the corresponding data entry for that token number in the white profile 23 and grey profile 25 to be increased. Subsequently if a message is rejected by a user, the data entries associated with token numbers generated for the rejected message are increased within the black profile 26 and corresponding entries are decreased in the white and grey profiles 23,25. Further whenever a message is received from any of the honey pot computers 12,13, the control module 20 processes the received messages and then utilises the generated list of token numbers to increase the data entries in the black profile 26.

In this way, the data entries in the white profile 23 are made to be representative of the frequency with which words and phrases generating different token numbers appear in messages dispatched to users' grey inboxes 19 which have not been rejected and the data entries in the black profile are made to be representative of the frequency with which words and phrases generating different token numbers appear in rejected messages and messages received by the honey pot computers 12,13.

Figure 5 is an illustrative example of corresponding portions of a white profile 23 and black profile 26 in the form of a histogram. As can be seen from Figure 5 for the first entry in the illustrated histogram the number of occurrences within the black profile 26 is greater than the number of occurrences in the white profile 23. In contrast for the second non zero entry in the white profile 23 the number of occurrences of a word or phrase generating that particular value is greater than the corresponding entry in the black profile 26. Utilising these different ratios the likelihood that a message is or is not an unwanted message can be estimated.

If probabilities of words or phrases appearing in wanted messages are estimated using only data from within the white profile 23 many of these estimates will be inaccurate because some of the messages sent to a user's grey inbox 19 will in fact be unwanted messages which a user will reject when the messages are eventually reviewed. In order to overcome this problem, in this embodiment, the data entries in the white profile 23 and black profile 26 are set so as to make the data entries dependent upon both the frequency with which different words and phrases appear in different types of messages and also the timing at which different messages are received by the authorisation server 11. A grey profile 25 indicative of the extent the values in the white profile 23 are reliant upon the processing of recent messages can then be stored so that this influence can be excluded when calculating estimates of probability.

More specifically, in this embodiment, a time dependent scaling factor is stored in relation to each of the profiles 23,25,26. These scaling factors are made to increase exponentially over time with the rate at which the grey profile scaling factor increases being greater than the rate for the white and black profiles. In this embodiment a time dependent scaling factor increasing exponentially with time

$$e^{\left(\frac{time}{T}\right)}$$

is used with T=2 months for the scaling factors used for the white and black profiles 23,26 and T=2 days for the scaling factor for the grey profile 25.

Whenever any of the data entries in the white or grey profiles 23,25 are increased, the data entries are incremented using the value of the scaling factor for the time at which the message used to increment the profile is dispatched by the authorisation server 11. Whenever data entries in the black profile 26 are increased, the data entries are incremented using the black scaling factor for the time at which the black profile 26 is updated.

When the data entry values are utilised to calculate probability estimates, the entries are divided by the scaling factor for the current time. This then means that when the data entry values are used older messages have progressively less influence on the values used, with the influence of older messages on the values on grey profiles being smaller than the influence of those messages in values obtained utilising the white and black profiles.

In order to prevent the data entries in the profiles becoming excessively large, all the data entries are periodically divided by $e^5$ whenever the scaling factor associated with a profile reaches $e^5$. At the same time the scaling factor for the profile is reset to 1.

Whenever any of the data entries in the white or grey profiles 33,25 are decreased, a scaling value corresponding to the scaling factor at the time the message was originally dispatched by the authorisation server 11 is used to update the data entries in the profile. If, however, the scaling factor has been reset in the interim between receipt of a message and its subsequent rejection, the data entries are incremented or decremented by values corresponding to the scaling factor at the time the message was originally dispatched by the authorisation server 11 divided by ($e^5$) raised to the power of the number of times the scaling factor has been reset in the interim to account for the reduction in size of the other stored data entries.

The use of the data entry values in the white, grey and black profiles will now be described in detail with reference to Figure 6.

Initially, the control module 20 selects (S6-1) the first token number from the list of token numbers for the message being processed. The control module 20 then identifies the data entries corresponding to the selected token number in the stored white and grey profiles 23,25 and calculates (S6-2) a clean value using the following equation:

$$\text{clean value} = \ln\left[\left(\frac{E_W}{W} - \frac{E_G}{G}\right)\left(\frac{\Sigma E_W}{W} - \frac{\Sigma E_G}{G}\right)^{-1}\right]$$

where $E_W$ and $E_G$ are the values of the data entries for the selected token number being processed from the white and grey profiles respectively, W and G are the current white and grey scaling factors and $\Sigma E_W$ and $\Sigma E_G$ are the sums of all the data entry values in the white and grey profiles respectively.

The control module 20 then (S6-3) calculates a spam value for the selected token number using the stored black profile 26 and the following equation:

$$\text{spam value} = \ln\left[E_B \, X\left(\Sigma E_B\right)^{-1}\right]$$

where $E_B$ is the value of the data entry for the selected token number being processed from the black profile 26, and $\Sigma E_B$ is the sum of all the data entry values in the black profile 26.

The current spam score for the message is then updated (S6-4) utilising the following equation:

spam score = spam score + clean value - spam value

The control module 20 then (S6-5) determines whether the final token number from the list of token numbers generated for the message being processed has been reached. If this is not the case the next token number from the list is selected (S6-6) and new clean and spam values are calculated using the next token number (S6-2-S6-3) and the spam score for the message being processed is further updated (S6-4) before the control module 20 checks once again (S6-5) whether the final token number in the list has been reached.

By processing the generated list of token numbers for a message this way, the control module 20 essentially uses the stored white, grey and black profiles 23,25,26 to calculate for each token number representative of a word or phrase: $word_k$ a value equal to:

$$\ln\left[\frac{\text{occurrences word}_k\ /\ \text{wanted}}{\text{total words}\ /\ \text{wanted}}\cdot\frac{\text{total words}\ /\ \text{unwanted}}{\text{occurrencesword}_k\ /\ \text{unwanted}}\right]$$

where $\text{occurrencesword}_k$/wanted is an estimate of the number of times $word_k$ appears in wanted messages, total words/wanted is an estimate of the total number of words or phrases which appear in wanted messages, total words/unwanted is an estimate of the number of words or phrases appearing in unwanted messages and the $\text{occurrencesword}_k$/unwanted is an estimate of the number of times $word_k$ appears in unwanted messages.

Calculating a spam score for a message based upon the above estimates means that the total spam score is equal to an estimated value of:

$$\text{Spam Score} = \sum_{1}^{n} \ln\left(\frac{p(\text{word}_k\ /\ \text{wanted})}{p(\text{word}_k\ /\ \text{unwanted})}\right)$$

where $p(\text{word}_k/\text{wanted})$ is the probability of a word or phrase $word_k$ appearing in a wanted message and $p(\text{word}_k/\text{unwanted})$ is the probability of a word or phrase $word_k$ appearing in an unwanted message. This spam score enables the probability of a message either being a wanted or unwanted message to be determined because if it is assumed that the probability of different words appearing in wanted and unwanted messages are independent the following equation would hold:

$$\ln\left(\frac{p(\text{wanted}\ /\ \text{word}_1\wedge\ldots\text{word}_n)}{p(\text{unwanted}\ /\ \text{word}_1\wedge\ldots\text{word}_n)}\right)$$

$$= \sum_{1}^{n} \ln\left(\frac{p(\text{word}_k\ /\ \text{wanted})}{p(\text{word}_k\ /\ \text{unwanted})}\right) + \ln\left[\frac{p(\text{wanted})}{p(\text{unwanted})}\right]$$

where $p(\text{wanted}/\text{word}_1\Lambda\ \ldots\ \text{word}_n)$ is the probability of a message being wanted given that the message contains all the words 1 through n, $p(\text{unwanted}/\text{word}_1\Lambda\ \ldots\ \text{word}_n)$ is the probability of a message being unwanted given the message contains words 1 through n, and p(wanted) and p(unwanted) are the probability of a message being a wanted or an unwanted message respectively.

Assuming that the probability of a message being a wanted or unwanted message is approximately equal the following would hold true for the calculated spam score:

$$\text{Spam Score} = \ln\left(\frac{p(\text{wanted} \ / \ \text{word}_1 \wedge ... \text{word}_n)}{p(\text{unwanted} \ / \ \text{word}_1 \wedge ... \text{word}_n)}\right)$$

which will be a positive value for messages containing words 1 through n if the message is more likely to be a wanted message than an unwanted message and a negative value if the message is more likely to be an unwanted message than a wanted message.

In practice, the probability of words appearing in wanted and unwanted messages are not independent and therefore a scaling error proportional to the square root of the number of token numbers generated for a message is introduced into the above equation. An actual assessment of the probability of a message containing a series of words or phrases being wanted or unwanted can therefore be made by calculating the value of the spam score divided by the square root of the number of token numbers used to calculate the score.

Returning to Figure 2, after a spam score has been calculated, the control module 20 then (S2-4) categorises the message based on the calculated spam score. In this embodiment, a message is categorised as a wanted message if the spam score divided by the square root of the number of token numbers generated for the message is greater than 1.4. A message is categorised as being unwanted if the spam score divided by the square root of the number of token numbers generated for the message is less than -1.4. In all other cases the message is categorised as not possible to classify at this point in time. The selection of the thresholds for identifying wanted and unwanted messages on the basis of the spam score in this way means that messages are only classified as being wanted or unwanted if they can be classified with approximately a 90% or greater certainty.

If the control module 20 classifies a message as an unwanted message, the control module 20 causes (S2-5) the message to be dispatched via the Internet 8 to a gateway computer 9;10 where the message is stored in a user's black inbox 18 as part of an archive of unwanted messages.

If the control module 20 classifies a message as not clearly being a wanted or an unwanted message, the control module 20 determines (S2-6) the length of time necessary for the authorisation server 11 to receive further information about similar messages which would enable the control module 20 to make a positive or negative assessment.

The calculation of a spam score for a message in the above manner generates a score essentially equal to:

$$\text{spam score} = \sqrt{n}\left[\Sigma \ln(p(\text{wanted} \ / \ \text{word}_k)) - \Sigma \ln(p(\text{unwanted} \ / \ \text{word}_k))\right]$$

where p(wanted/word$_k$) are estimates obtained using the difference in scaled data entry values generated using data entries from the white and grey profiles and p(unwanted/word$_k$) are estimates obtained using scaled data entry values from the black profile and n is the number of words and phrases in the message for which token numbers are generated.

It is possible to estimate the extent to which this spam score for a message is likely to change. This is because most of the information about whether words appear in wanted or unwanted messages is received as a result of user rejection of messages sent to their grey inbox 19. Since the data entries of the grey profile 25 are representative of an estimate of the frequency with which words and phrases assigned different token numbers appear in messages which have been delivered to a user's grey inbox 19 but which are not yet reviewed, spam scores for a message assuming that all delivered but unreviewed messages are either accepted or rejected by a user can be estimated and hence the range of variation in calculated spam score which is likely to occur in the time span with which users review messages can be determined.

More specifically in the case of a message which results in the generation of a positive spam score indicative of a message probably being a wanted message, the expected variation in the spam score which is likely to result in a spam score indicative of a positive assessment of the message being wanted can be calculated using the following equation:

$$\text{Positive variation} = \sum \ln\left(\frac{E_W \cdot \Sigma E_B}{\Sigma E_W \cdot E_B}\right) - \text{Spam Score}$$

where $E_W$, $E_B$, $\Sigma E_W$, $\Sigma E_B$ and Spam Score are values as have previously been explained.

A time delay within which the spam score for a message may become a positive evaluation of the message being a wanted message can then be calculated on the assumption that users will reject any unwanted messages on average 2 days from the dispatch of a message from a sender computer 1,2 can therefore be calculated using the following equation:

$$\text{Time delay} = \frac{\text{spam score - } 1.4\sqrt{n}}{\text{positive variation}} \text{ X 2 days}$$

Conversely in the case of a message with a negative spam score which is not sufficiently negative for the control module 20 to classify the message as being unwanted, the possible negative variation of the spam score arising as the result of the rejection by the users of all recently dispatched messages can be calculated utilising the following equation:

$$\text{Negative variation} = \sum \left[\ln\left(\frac{E_B}{\Sigma E_B}\right) - \ln\left(\frac{\Sigma E_B}{B} + \frac{\Sigma E_G}{G}\right) + \ln\left(\frac{E_B}{B} + \frac{E_G}{G}\right)\right]$$

where $\Sigma E_B$, $\Sigma E_G$, B and G are values as have previously been explained.

A time delay based on the assumption that users will review and reject all recently dispatched messages on average 2 days from dispatch of a message from a sender computer 1,2 can then be calculated using the following equation:

$$\text{Time delay} = \frac{\text{spam score + } 1.4\sqrt{n}}{\text{negative variation}} \text{ X 2 days}$$

After a time delay has been calculated, the control module 20 determines (S2-7) whether the calculated time delay plus the difference between the stored time of receipt of the current message 32 and the present time is greater than a maximum delay time. In this embodiment this maximum delay time is set to be equal to 1 day.

If the time by which a message is to be delayed does not exceed 1 day, the control module 20 (S2-8) delays dispatch of the message. During this delay the authorisation server 11 will receive further information about the rejection of messages from the client computers 4,5,6,7 and will update the stored white, grey and black profiles 23,25,26 accordingly.

Periodically, during the delay, the control module 20 calculates (S2-3) anew spam score for the message using the updated white, grey and black profiles 23,25,26. This can be achieved by, the control module 20, randomly selecting undelivered messages for reassessment. The control module 20 then reassesses (S2-4) whether the message can be either classified with a reasonable certainty as being an unwanted message or a wanted message or whether such classification is still not yet possible.

If the message still can not be classified a new time delay is calculated (S2-6) and provided that this new time delay would not cause the message to be delayed beyond the maximum delay time, the message is reassessed during the new time delay (S2-6-S2-8, S2-3, S2-4).

Randomly selecting messages for assessment ensures that each message is reassessed as often as possible and hence minimises the time each message is delayed if it can be classified. In other embodiments, it could of course be possible to reassess a message only when the delay period had passed. An advantage of such a system would be that the number of times each message was assessed would be lower and hence less processing would be required.

However, such a system could delay messages for unnecessarily long time periods if an estimated required delay period turns out to be a poor estimate.

If the control module classifies a message as being a wanted message (S2-4) or alternatively when the control module 20 determines (S2-7) that the delay of dispatch of a message to determine an accurate classification of a message exceeds the maximum threshold (S2-7), referring to Figure 2B, the control module (S2-9) proceeds to take each of the token numbers generated for the current message and increment the grey and white profile data 23,25 entries corresponding to the token numbers by the grey and white scaling factors for the current time. The control module 20 then stores the current time as a time stamp 32 for the message in place of the time stamp 32 indicating the time of receipt of the message by the authorisation server. The control module 20 then dispatches (S2-10) the message via the Internet 8 and a gateway computer 9,10 to the grey inbox 19 of the email program 17 of the client computer for which the message is addressed.

As will be described in detail when a message stored within the grey inbox 19 is reviewed, a user is given the option to accept or reject the message. If the message is rejected a signal identifying the message is sent via the gateway computer 9;10 and the Internet 8 back to the authorisation server 11. The authorisation server 11 therefore waits (S2-11) to see if any signal relating to a dispatched message is received whilst other messages are being processed.

If the message is not rejected no signal will be received and the processing of a message by the authorisation server 11 ends.

Alternatively if a signal about a rejected message is received by the authorisation server 11 the control module 20 proceeds (S2-12) to increment the data entry values in the black profile 26. Specifically, the data entry values for each of the token numbers in the list of token numbers for the rejected message are incremented by an amount corresponding to the black scaling factor for the current time. The control module 20 then decrements the corresponding white profile 23 data entries and grey profile 25 data entries using the white and grey scaling factors respectively for the time 32 the rejected message was dispatched to the user's inbox divided by any number by which the data entries in the white and grey profile 23,25 respectively have been divided in the interim between the time 32 the rejected message was dispatched to the user's inbox and the current time. The authorisation server 11 then can make assessments of the likelihood of other messages being wanted or unwanted based on the updated profiles.

<u>Processing Performed by Email Program</u>

The processing performed by the email program 17 provided on each of the client computers 4,5,6,7 will now be described in detail with reference to Figures 7 and 8A-C.

Referring to Figure 7 which is a flow diagram of the processing performed by the e-mail program 17, when any of the email programs 17 are initially invoked, a user is given an option of viewing either the white inbox 16, grey inbox 19 or black inbox 18. The email program 17 therefore (S7-1) waits until one of the inboxes is selected. If the email program 17 detects that the white inbox is selected a user interface for viewing messages stored in the white inbox 16 is (S7-2) displayed.

Figure 8A is an exemplary illustration of a user interface displayed as a result of a user selecting the white inbox messages for review.

As can been seen from Figure 8A, when the white inbox messages are selected for review, a user interface corresponding to a conventional email user interface is displayed to a user. The interface comprises on the left of the interface, a list of folders 50 giving the user the option of reviewing the white, grey or black inboxes, a first display area 52 at the top right of the interface displaying the sender's address, time of dispatch and subject lines for received messages stored within the white inbox 16 and a second display area 53 beneath the first display area 52 for displaying the sender's address, subject line, time of dispatch and text of a selected message from within the messages in the white inbox 16.

Also provided as part of the user interface is a pointer 54 which under the control of an input device such as the keyboard or mouse, a user can control so as to select individual messages from within the first display area 52 which causes the text of the selected message to be displayed in the second display area 53, thereby enabling a user to review their messages.

Returning to Figure 7, if the email program 17 determines (S7-1)that a user has selected the grey inbox for viewing, a grey inbox user interface is displayed (S7-3).

Figure 8B is an illustrative example of a user interface for viewing messages stored within the grey inbox 19. The user interface for viewing messages in the grey inbox is almost identical to that used to view the messages from the white inbox previously described, except that additionally an accept button 55 and a reject button 56 are displayed as part of the interface.

Once the user interface for viewing messages in the grey inbox has been displayed a user can then under the control of an input device utilise the pointer to select any of the messages stored in the grey inbox 19 displayed in the first display area 52 which causes the text of the selected message to be displayed in the second display area 53.

When the email program 17 detects (S7-4) that a message has been selected and displayed in the second display area 53, the email program 17 waits (S7-5) to determine whether the accept button 55 or the reject button 56 has been selected.

If the reject button 56 is selected the email program 17 causes a rejection signal to be sent via the gateway computer 9;10 and the Internet 8 to the authorisation server 11 to inform the authorisation server 11 that the selected message has been rejected by a user. This rejection of a message is then utilised by the authorisation computer 11 to update the contents of the white profile 23, grey profile 25 and black profile 26 as has previously been described so that the classification of subsequent messages by the authorisation server 11 can take into account the rejection of the selected message.

If, instead, the email program 17 determines (S7-5) that a user has selected the accept button 54 the email program 17 causes (S7-7) the selected message to be transferred from the user's grey inbox 19 into the user's white inbox 16 and sends a signal to the gateway computer 9;10 to which the client computer 4;5;6;7 is attached so that the classification and filtering module 15 on the gateway computers 9;10 can update a stored list of acceptable addresses so that subsequent messages received from the sender of the selected message are automatically accepted by the gateway computer 9;10.

If the email program 17 determines (S7-1) that a user has selected the black inbox for viewing, a black inbox user interface is displayed (S7-8).

Figure 8C is an illustrative example of a user interface for viewing messages stored in a user's black inbox 18. The interface is almost identical to the user interface for viewing the message from the white inbox except that the first display area 52 listing the sender's addresses and date and subject lines of messages stored within the black inbox 18 has an additional column 58 displaying the calculated probabilities that rejected messages were unwanted messages, and the user interface includes a retrieve button 59.

In a conventional way a user can then utilise the pointer 54 to select any of the messages displayed within the first display area 52. If the email programs 17 detects that a particular message has been selected (S7-9) the body text of the message is displayed within the second display area 53. If subsequently the email program 17 identifies (S7-10) that the retrieve button 59 has been selected using the pointer 54, the email program causes (S7-11) the selected message to be transferred from storage in the black inbox 18 into the user's grey inbox 19.

<u>Second Embodiment</u>

A second embodiment of the present invention will now be described with reference to Figures 9, 10, 11, 12A and 12B.

Figure 9 is a schematic block diagram of a computer network embodying a filtering system in accordance with a second embodiment of the present invention. In this embodiment the authorisation server 11 of a first embodiment is replaced by a different authorisation server 60. The remaining elements of the computer network of Figure 9 are identical to the corresponding elements in Figure 1 and have been labelled with the same reference numbers.

In this embodiment the authorisation server 60 stores a classification module 61 for generating spam scores for received messages, a clustering module 62 for identifying similar messages, a dispatch module 63 for co-ordinating the dispatch of messages to user's grey inboxes 19 or black inboxes 18; a message database 64 for storing copies of received messages; and a clean profile 65 and a spam profile 66 for classifying messages similar to the black and white profiles of the previous embodiment.

The processing of messages in accordance with this embodiment will now be described with reference to Figure 10.

In this embodiment when a message is received a message record 70 is stored (S10-1) within the message database 64. This message record comprises a message number 71 being the next available message number, a copy of the message 72, and a null cluster number 73. Next, the classification module 61 processes the received message to generate a list of token numbers representative of the content of the message in exactly the same way as has previously been described in relation to the first embodiment. The classification module 61 then utilises the generated list to increment by one, corresponding data entries in the clean profile 65.

Thus in this way the data entries of the clean profile 65 are made to be representative of the number of occurrences of words and phrases generating different token numbers in messages processed by the authorisation server 60.

In this embodiment, if a message is subsequently rejected by a user (S10-5), the data entries in the clean profile 65 corresponding to token numbers generated for the rejected message are decremented by one and the corresponding data entries in the spam profile 66 are incremented by one (S10-6). Additionally whenever a message is received from any of the honey pot computers 12,13 the received message from a honey pot computer is processed to generate a list of token numbers and the corresponding data entries in the spam profile 66 are also incremented by one.

The data entries in the clean profile 65 are therefore indicative of the frequency with which different words and phrases appear in all messages processed by the authorisation server 60 which have not been rejected and the data entries in the spam profile 66 are indicative of the frequency of the occurrence of words and phrases in rejected and unwanted messages.

A spam score for a message can therefore be generated utilising the token numbers for a message and the following equation:

$$\text{spam score} = \frac{1}{\sqrt{n}}\left(\Sigma\ln\left(\frac{E_C}{\Sigma E_C}\right) - \Sigma\ln\left(\frac{E_S}{\Sigma E_S}\right)\right)$$

where n is the number of token numbers generated for a message and $E_C$ and $E_S$ are the data entries for each of the token numbers generated for a message selected from the clean 65 and spam 66 profiles and $\Sigma E_C$ and $\Sigma E_S$ are the sums of all data entries from the clean 65 and spam 66 profiles respectively.

The classification module 60 then (S10-2) utilises the calculated spam score to classify the received message as either being very likely to be an unwanted message where the spam score has a high negative value, e.g. less than minus 1, very likely to be a wanted message where the spam score has a high positive value, e.g. greater than plus 1, or having an uncertain status where the spam score has an intermediate value.

If the received message is classified as being an unwanted message, the classification module 61 invokes the dispatch module 63 which causes the unwanted message to be sent (S10-3) for storage in a user's black inbox 18.

Alternatively, if a message is classified as being a wanted message, the classification module 61 invokes the dispatch module 63 to cause the message to be sent (S10-4) via the Internet 8 and a gateway computer 9;10 to a user's grey inbox 19, where a user can review the message and either accept or reject the message.

Subsequently, if (S10-5) a user rejects a message stored in their grey inbox 19, a control signal sent from the client computer 4;5;6;7 via the gateway computers 9;10 and the Internet 8 back to the authorisation server 60, which utilises (S10-6) the generated list of token numbers for the message to update the clean profile 65 and the spam profile 66. These profiles are updated by taking each token number in a generated list of token numbers for the rejected message and incrementing the corresponding data entry in the spam profile 66 by one and decrementing the corresponding data entry in the clean profile by one.

For messages where the classification module 61 generates a spam score which is neither highly negative nor highly positive, the classification module 61 (S10-7) invokes the clustering module 62 which assigns a cluster number 73 to the message.

As will be described in detail the processing of the clustering modules 62 is such to assign the same cluster number 73 to similar messages. The clustering module 62 also controls the dispatch of messages assigned to clusters (S10-8) so that more information about messages assigned to that same cluster can be received.

After a delay the clustering module 62 then either dispatches (S10-3) all messages assigned to a cluster to user's black inboxes 18 if the clustering module 62 determines that the messages in a cluster are most likely to be unwanted messages or alternatively releases a single message (S10-4) from the cluster which is dispatched to a user's grey inbox 19 so that further feedback on which to classify messages within the cluster can be received.

The structure and processing of the clustering module 62 will now be described in detail with reference to Figures 11 and 12A and B.

Figure 11 is a block diagram of the clustering module 62.

In this embodiment the clustering module 62 comprises a phrase identifier 80 for dividing a message into a number of phrases; a phrase classifier 82 for assigning a spam score to phrases identified by the phrase identifier 80; and a cluster update module 83 for utilising phrases classified by the phrase identifier 80 to assign a cluster number to a message and for controlling the dispatch of messages.

The clustering module 62 also includes a data store 84 for storing a list of token numbers for phrases identified by the phrase identifier 80 for a message, together with spam scores for those phrases calculated by the phrase identifier 80; and a message profile store 85 for storing a selection of token numbers stored in the data store 84; and a cluster database 87.

In this embodiment the cluster database 87 is arranged to store a number of cluster records 90, each comprising a cluster number 92, a cluster profile 94, a cluster spam score 96, a last dispatch time 97, a list of messages to send 98 and a challenge sent flag 99. As will be described in detail later, the cluster database 87 enables a message being processed to be assigned to a cluster of similar messages and then subsequently enables an assessment as to whether or not to dispatch the message to a user's grey inbox 19 or black inbox 18 to be made using information about those similar messages.

In use when the clustering module 62 is invoked, the phrase identifier 80 and phrase classifier 82 proceed to process a message for which a spam score has just been generated by the classification module 61 to identify within the message a selection of phrases which are most likely to indicate that the message is an unwanted message.

In this embodiment, this is achieved by the phrase identifier 80 identifying within a message a series of anchor words and dividing the message into a series of overlapping phrases in exactly the same way as has previously been described in relation to the first embodiment. Each of the identified phrases is then classified by the phrase classifier 82.

In this embodiment, the phrase classifier 82 comprises a store of words which frequently appear in unwanted messages each of which is associated with a spam score. Typical words which appear in unwanted message are the words "click", "unsubscribe" and sales jargon such as the words "exciting" and "opportunity". The phrase classifier 82 scans the phrases generated by the phrase identifier 80 and each time one of these words appears the spam score for the phrase is incremented by the amount associated with that word. The phrase classifier 82 also processes each of the selected phrases to generate a token number in the same way as has previously been described in the first embodiment.

The generated token numbers are then stored together with the calculated spam scores for the phrases in the data store 84.

When the entire message has been processed, the phrase classifier 82 proceeds to select the token numbers associated with the greatest spam scores and stores the token numbers for those phrases as a message profile 85. In this embodiment the token numbers associated with the top 32 spam scores are stored as the message profile 85. In this way each message which is processed by the clustering module 62 is assigned a message profile consisting of a list of 32 token numbers where the token numbers are representative of phrases which are likely to indicate that the message is an unwanted message.

The stored message profile 85 is then utilised by the cluster update module 83 to assign a message to a message cluster so that an assessment as to whether or not the message should be dispatched to a user's grey inbox 19 or a user's black inbox 18 can be made based on information about similar messages as will now be described with reference to Figures 12A and B.

In this embodiment each of the cluster records 90 stored within the cluster database 87, includes a cluster profile 94 which is a list of token numbers. When a new message profile has been generated and stored, the cluster update module 83 calculates (S12-1), for each of the cluster records 90, a similarity score by dividing the number of token numbers in the message profile which also appear in the cluster profile 94 of the cluster record 90 being considered, by the total number of different token numbers appearing in the cluster profile 94 and the message profile.

The cluster update module 83 then determines whether (S12-2) any of the cluster records 90 resulted in the calculation of a similarity score in excess of 0.6. In this embodiment a similarity score of 0.6 or greater is taken to be indicative of the content of a message currently being considered as being similar to the identified cluster.

If none of the stored cluster records 90 result in the generation of a similarity score greater than 0.6, the cluster update module 83 causes (S12-3) the cluster database 87 to store a new cluster record 90. This new cluster record comprises a cluster number 92 being the next available cluster number, a cluster profile 94 comprising a copy of the message profile generated for the current message, a cluster spam score 96 being the spam score generated for the current message by the classification module 61, a last dispatch time 97 being the current time, an empty messages to send list 98 and a null challenge sent flag 99. The cluster update module 83 then adds to the message record 70 in the message database 64 for the current message a cluster number 73 being equal to the cluster number 92 of the newly generated record 90.

Once a new cluster record 90 has been stored in the cluster database 87, the cluster update module 83 causes (S12-4) the dispatch module 63 to be invoked to send the current message out to a user's grey inbox 19. By automatically sending out the first message which is assigned to a cluster, this means that the content of at least one message from a cluster will be reviewed by a user and therefore feedback on messages in the cluster will be received.

If, when comparing the similarity score for existing clusters, the cluster update module 83 determines (S12-2) that at least one of the generated cluster scores is greater than the 0.6 similarity threshold, the cluster update module 83 proceeds (S12-5) to add the current message to the cluster which resulted in the generation of the greatest similarity score.

This is achieved by adding to the list of token numbers of the cluster profile 94 of the cluster record 90 any token numbers in the current message profile, which do not already appear in the cluster profile 94. The cluster spam score 96 is then updated by calculating an average of the existing cluster spam score 96 weighted by the number of messages to send in the messages to send list 98 and the spam score for the current message previously calculated by the classification module 61.

This score is stored as the cluster spam score 96 for the cluster record 90. The message number for the message record 70 in the message database 64 corresponding to the current message is then added to the end of the messages to send list 98 in the cluster record 90 being updated and the cluster number 92 for the cluster record 90 is stored as a cluster number 73 for the message record 70 for the current message.

By generating and updating the cluster record 90 in this way, each message which is processed by the clustering module 62 is assigned a cluster number 92 where similar message are assigned the same cluster numbers.

The cluster update module 83 then determines whether to dispatch messages in the messages to send lists 95 to a user's grey inbox 19 or user's black inbox 18 utilising the cluster spam score 93 and any other information about messages assigned to the cluster as will now be described.

Initially the cluster update module 83 selects (S12-6) the first cluster record 90 which does not have an empty messages to send list 98. The cluster update module 83 then (S12-7) utilises the cluster spam score 96 and the challenge sent flag 99 to determine whether or not to send a challenge to the sender computer 1,2 of a message within the cluster.

In this embodiment, if the cluster spam score 96 for a cluster is indicative of a message probably not being a wanted message, the cluster update module 83 is arranged to send a request to a sender computer 1;2 from which the message most recently added to the cluster was received.

The message requests that the sender of the earlier message confirms that the earlier message should be delivered. Such an action requires that the sender of the earlier message actively replies to the authorisation server's request. This is generally not possible in the case of large scale senders of mass emails because such messages are normally computer generated and replying to a request requires human interaction. The failure of a sender to respond to a challenge is therefore indicative of messages in a cluster not being wanted.

In this embodiment if the cluster spam score 96 is negative and the data stored as the challenge sent flag 99 does not correspond to any of the messages in the messages to sent list 98 a challenge is dispatched to the sender of the final message in a list of message to send 98. The challenge sent flag 99 is then updated by deleting any references to messages not appearing on the message to send list 98 and adding the message number of the message for which a challenge has just been sent.

After either a decision not to send a challenge has been made (S12-7), or alternatively after a challenge has been sent (S12-8), the cluster update module 83 then (S12-9) determines a dispatch delay period for the cluster.

In this embodiment the dispatch delay period is calculated on the basis of the following factors:

1. A basic dispatch period is determined utilising the cluster spam score so that messages which are more likely to be unwanted messages are delayed for longer periods and messages which are more likely to be wanted messages are delayed for shorter periods.
2. For each cluster, a count is made of the number of messages in the cluster dispatched to users which were subsequently rejected by users and this is compared with the number of messages assigned to a cluster. Where the proportion of rejected messages increases the basic dispatch time period is also increased.
3. Similarly whenever messages are received from any of the honey pot computers 12,13 such messages are assigned to a cluster in the same way as has previously been described and a count is kept of the number of such messages and where a message is received from a honey pot computer 12,13 assigned to a cluster the delayed period for that cluster is increased.
4. Finally the proportion of challenges sent out on a cluster which are responded to is also calculated and the delay period for a message is increased where the proportion of responses is less than a threshold.

The cluster update module 83 then (S12-10) compares the current time with the last dispatch time 94 for the cluster record 90 and the calculated dispatch period. If the current time is less then the sum of the last dispatch time 97 and the calculated dispatch period, the cluster update module 83 invokes (S12-11) the dispatch module 63 and causes the message identified by the head of the messages to send list 98 to be sent to a user's grey inbox 90. The number of that message is then removed from the head of the messages to send list 98 and the last dispatch time 97 is set to be the current time.

The cluster update module then (S12-12) compares the calculated dispatch period for the cluster with a threshold. Since the dispatch period is increased for messages which are most likely to be indicative of unwanted messages and further increased whenever feedback is received in the form of either messages forwarded from the honey pot computers 12,13 or by user rejection of sent messages or by failure of sender computers 1,2 to respond to challenges, a lengthy delay period is indicative of a cluster being a cluster of unwanted messages. If the delay period is above a preset threshold the cluster update module 83 is therefore able to determine that all the messages in the cluster are likely to be unwanted messages and therefore the cluster update module 83 invokes (S12-13) the dispatch module 63 and causes all of the messages within the messages to send list 98 to be dispatched to a user's black inbox 18 to be stored as part of an archive of unwanted messages.

After any messages from the first cluster with messages to send have been dispatched the cluster update module 83 then (S12-14) checks whether any of the other clusters have a message to send list 98 indicative of there being messages to send and if this is the case the next cluster having messages to send is selected (S12-15) and processed (S12-7-S12-13) before a check is made whether the final cluster has been reached (S12-14). When the final cluster has been reached the processing of the cluster update module 83 ends.

Third Embodiment

A third embodiment of the present invention will now be described with reference to Figure 13 which is a block diagram of a computer network embodying a filtering system in accordance with the third embodiment of the present invention.

In this embodiment much of the computer network is identical to the network of the previous embodiments. Where aspects of the computer network have not changed they are indicated by the same reference numerals and the content of those elements will not be redescribed here.

In the previous two embodiments, filtering systems have been described where apart from messages identified as clearly being wanted or unwanted on the basis of a simple check performed by a classification and filtering module 15 on a gateway computer 9,10, all messages are processed centrally. In this embodiment a distributed filtering system is described where the classification of messages is performed locally at the gateway computers 9;10.

In accordance with this embodiment the classification and filtering modules 15 of the previous embodiments are replaced by modified classification and filtering modules 100. These classification and filtering modules 100 are each arranged to interact with profile data 101,102 stored in the gateway computer 9;10 where the classification and filtering modules 100 are present. In addition, instead of a authorisation server 11;60 a co-ordination computer 105 is provided connected to the Internet 8.

When a message is received by a gateway computer 9,10, the classification and filtering module 100 on the gateway computer 9,10 generates a spam score for a message utilising the profile data 101;102 on the gateway computer 9;10 in the same way in which a spam score is generated by the authorisation server 11 using the white profile 23, grey profile 25 and black profile 26 of the first embodiment.

If the generated spam score is indicative of a message clearly not being a wanted message the message is automatically stored in the black inbox 18 provided on the gateway computer 9;10. Conversely if a message is classified as being a wanted message, in this embodiment it is sent to a user's white inbox 16.

If a message is not classified as being wanted or unwanted as this stage, dispatch of the message is delayed for a time period determined utilising the profile data 101;102.

During this delay, the token numbers generated for a message are sent via the Internet 8 to the co-ordination computer 105. When received, the token numbers are then used to update master profile data 106 stored on the co-ordination computer 105 in the same manner in which the white profile data 23 and grey profile 25 are updated in the first embodiment.

In the same period, other gateway computers 9;10 will also be sending token data to the co-ordination computer 105. The co-ordination computer will also receive copies of messages from the honey pot computers 12,13. All of the received data is utilised to update the master profile data 106 in the same way as has previously been described for the first embodiment.

After the delay determined for a message, the gateway computer 9;10 requests a download of the master profile data 106 from the co-ordination computer 105. A copy of the master profile date 106 currently stored on the co-ordination computer 105 is then stored as profile data 101;102 on the gateway computer 9;10 which requested the update. The classification and filtering module 100 then utilises this updated profile data 101;102 to reassess the possibility of classifying a message.

If as a result of the reassessment of a message, a message is determined as being unwanted, it is stored in the black inbox 18. If a message is determined as being wanted it is delivered to the user's white inbox 16. If the message cannot be classified, the message is held and then reassessed after a delay. Finally, if a message has been delayed a maximum delay period the message is delivered to the user's grey inbox 19.

At any time, if a user rejects a message delivered to their grey inbox 19 a signal is sent to the gateway computer 9;10 to which the client computer 4;5;6;7 storing the message is attached. The gateway computer 9;10 then dispatches a copy of the list of token numbers for the rejected message via the Internet 8 to the co-ordination computer 105 which updates the master profile data 106 in the same way in which a white 23, grey 25 and black 26 profile are updated in response to rejection of a message in the first embodiment.

Fourth Embodiment

A further embodiment of the present invention will now be described. This embodiment is exactly the same as the first embodiment except the manner in which the control module 20 updates and utilises the white 23, grey 25 and black 26 profiles is different.

In this embodiment each time a message is dispatched, the data entries associated with token numbers generated for a message in the white profile 24 and grey profile 25 are incremented by one. When a message is received from a honey pot computer 12;13 token numbers for the message are generated and the data entries associated with the generated token numbers in the black profile 26 are incremented by one.

In this embodiment, whenever a user views a message stored in the user's grey inbox 19, the email program 17 either generates a signal indicating user rejection when a user selects the reject button 56 or generates a signal indicating user acceptance if a user selects the accept button 55. These signals are passed via a gateway computer 9;10 and the Internet 8 back to the authorisation server 11.

When a signal is received by the authorisation server 11, a set of token numbers for the reviewed message is generated. If the received signal indicates user rejection, each of the corresponding data entries associated with token numbers in the set from the white 23 and grey 25 profile are decremented by one and the corresponding data entries in the black profile 26 are incremented by one. Conversely, if the signal indicates user acceptance the corresponding data entries in the grey profile 25 are decremented and no amendment is made to either the black 26 or white 23 profiles.

In addition to updating the stored profile data, the control module 20 also stores a record of the proportion of messages which are accepted or rejected by users. When determining a spam score for a new message, this information is used to model the likely effect of subsequent user rejection or acceptance of outstanding messages. More specifically as in the first embodiment, for each token generated for the content of a message being classified a clean value and a spam value are calculated and a spam score being the sum of all the calculated clean values for a message less the sum of all the spam values is determined. However, in this embodiment the following equations are used:

$$\text{Clean} = \ln\left[\left(E_W - \lambda E_G\right)\left(\Sigma E_W - \lambda \Sigma E_G\right)^{-1}\right]$$

$$\text{Spam} = \ln\left[\left(E_B + \lambda E_G\right)\left(\Sigma E_B + \lambda \Sigma E_G\right)^{-1}\right]$$

where $E_W$, $E_G$ and $E_B$ and $\Sigma E_W$, $\Sigma E_G$, $\Sigma E_B$ are values as have previously been explained and $\lambda$ is a value representative of the fraction of messages sent out to users' grey inboxes 19 which are subsequently rejected by users.

Thus in this way, the control module 20 is able to utilise the stored grey profile 25 indicative of the content of sent messages for which no feedback has been received to improve estimated spam scores by assuming that a representative proportion of the messages will be subsequently accepted or rejected.

Further embodiments and modifications

Although in the above described embodiments the transfer of messages to client computers 4-7 has been described, it will be appreciated that the present invention is applicable to any suitable equipment for transmitting and receiving messages. Thus for example, the present invention could be used to filter messages received by phones, personal digital assistants (PDA's), dedicated email appliances, public email terminals, etc.

Similarly, display of messages could take any suitable form. Thus for example instead of displaying on a screen, messages could be processed by a voice synthesiser and output as speech. Alternatively, messages could be output by a Braille machine.

Further, although the above described embodiments refer to email messages, any suitable form of message could potentially be processed. Thus for example a system for classifying picture messages or video messages could be provided and the messages filtered based on the classifications made in the same way in which text messages are described as being filtered in the embodiments.

In the above embodiments, systems for classifying English language messages are described. It will be appreciated that any suitable system for generating a set of tokens from a message could be used. Thus for example, in the case of a Japanese language system where spaces are not used to delineate words, tokens could be assigned to different Kanji characters appearing in a message. Alternatively a message could be divided at the boundary between different types of Japanese characters to separate Kanji, Katakana and Hiragana words from a message.

In the embodiments described in detail, reference is made to the transfer of messages via the Internet 8. It will be appreciated that the present invention is applicable to any suitable message transmission system. Thus for example, the invention could be applied to messages transferred via private networks or alternatively through other communication routes such as via the telephone network or cellular phone network.

Although in the third embodiment a system is described in which new master profile data is downloaded by a gateway computer 9; 10 every time a message is reassessed, it will be appreciated that in other embodiments the profile data 101;102 stored on a gateway computer might only be updated for a batch of messages or alternatively be only updated periodically.

Further, although central co-ordination of profile data has been described, it will be appreciated that where a large volume of email messages pass through a gateway computer, the messages going to the gateway computer alone may be sufficient to generate useful profile data for assessing and reassessing the classifications assigned to messages. In such a system no central authorisation server or co-ordination computer would need to be provided as all the processing of an authorisation server could take place at the gateway computer.

A further alternative would be to provide a system in which a number of independent filtering modules periodically or occasionally exchanged messages or classification data with one another so as to benefit from user feedback on the acceptance or rejection of messages both from client computers directly connected to a gateway computer and from user feedback from client computers connected to other gateway computers.

Although in the above embodiments systems have been described in which control signals are generated whenever a user rejects a message, it will be appreciated that a system could be provided which generated control signals whenever a user accepted a message. In such a system failure to receive such a signal could then be used to classify a message as an unwanted message. Alternatively a system could be provided where whenever a message was reviewed by a user, control signals indicative of a message being wanted or unwanted would be generated. Thus in this way data for classifying messages could be generated utilising only messages which had actually been reviewed by users.

A further alternative would be for a classification system to receive copies of internal messages from within a local communications systems in addition to receiving copies of messages received from outside. In such a system, it could be assumed that internally generated messages would not be unwanted messages and this information could be used to generate profile data for wanted messages.

In the first two embodiments, systems are described where when a message is classified, the message is dispatched from an authorisation server. It will be appreciated that in other systems a gateway computer could hold a copy of a message and forward the copy to an appropriate location in response to a control signal generated on the basis of the classification of the message.

In such a system, instead of sending a copy of a message for classification, the gateway computer could process a message to generate a list of token numbers and dispatch the token numbers to an authorisation server. When a list of token numbers was received, the authorisation server could then process the list to generate a classification for the message in the same way as has previously been described.

More generally, any suitable digest or abstract of a received message could be used to determine a classification for a message with data representing the digest or abstract being sent to an authorisation unit for classification whilst a full copy of the message is retained at the gateway computer.

Although in the above embodiments messages are described as being stored in different locations based upon the classification of the messages as being wanted or unwanted messages, it will be appreciated that other control functions could be triggered by the classification of a message as being wanted or unwanted. Thus for example all unwanted messages could be automatically discarded and never forwarded to an archive. In such a system, a sender of a discarded message could be informed that the senders message was not delivered. Alternatively instead of forwarding unwanted messages a receiver could be sent a list of all unwanted messages so as to be informed of which messages had been blocked.

Although in the embodiments reference has been made to a dual classification system in which messages are classified into wanted or unwanted messages, it will be appreciated that the described invention could be used to sort messages into any number of different categories, where user feedback about the message categories was available. As in the case of sorting wanted from unwanted messages, where a more complex classification system was used, in the event that a message could not be clearly classified, delaying dispatch of a message and attempting to reclassify the message during the delay would result in reduction in the number of borderline messages which were misclassified.

In the first embodiment, a system is described in which messages are classified using profile data and a scaling factor which enable the message classifier to assume that messages are acceptable in the event that no user rejection of a message is received. In the embodiment, the scaling factor is described as increasing at a fixed exponential rate so that the effect of the classification of older messages has a decreasing influence on the classifications assigned to newer messages. It will be appreciated that the time constant used to model user response need not be fixed nor predefined. Thus for example instead of fixing the rate at which the influence of older messages declines, the rate could be based on a measured average time for receiving user rejection or acceptance of messages. Alternatively, instead of fixing a particular rate, the rate could vary with time of day to allow longer period to pass before a message is assumed to be accepted at times when messages are unlikely to be checked and shorter periods when messages are more likely to be checked.

Although the embodiments of the invention described with reference to the drawings comprise computer apparatus and processes performed in computer apparatus, the invention also extends to computer programs, particularly computer programs on or in a carrier, adapted for putting the invention into practice. The program may be in the form of source or object code or in any other form suitable for use in the implementation of the processes according to the invention. The carrier may be any entity or device capable of carrying the program.

For example, the carrier may comprise a storage medium, such as a ROM, for example a CD ROM or a semiconductor ROM, or a magnetic recording medium, for example a floppy disc or hard disk. Further, the carrier may be a transmissible carrier such as an electrical or optical signal which may be conveyed via electrical or optical cable or by radio or other means.

When a program is embodied in a signal which may be conveyed directly by a cable or other device or means, the carrier may be constituted by such cable or other device or means.

Alternatively, the carrier may be an integrated circuit in which the program is embedded, the integrated circuit being adapted for performing, or for use in the performance of, the relevant processes.

## Claims

**1.** Apparatus for classifying messages comprising:

a classification store configured to store classification data;
an update module operable to update classification data stored in said classification store;
a data store operable to store data indicative of items of content included in messages; and
a message classifier operable to utilise classification data stored in said classification store to classify messages including items of content identified by data stored in said data store, wherein said message classifier is operable to determine whether a message including items of content identified by data stored in said data store can be classified utilising data currently stored in said classification store and if a message can not be classified utilising the currently stored classification data to reassess the classification of a message including items of content identified by data in said data store after a delay utilising the classification data stored in said classification store after said delay as updated by said update module.

**2.** Apparatus in accordance with claim 1, wherein said data store is operable to store as data indicative of items of content included in messages, copies of the messages to be classified.

**3.** Apparatus in accordance with claim 1 or 2 wherein said message classifier is operable to assign a default classification to messages which can not be classified utilising classification data stored in said data store as updated by said update module within a preset time period.

**4.** Apparatus in accordance with claim 1, 2 or 3, wherein said message classifier comprises: a delay determination module operable to determine for a message which can not be classified, a time period for the reassessment of the message on the basis of the speed at which said update module is likely to alter the classification data stored in said data store.

**5.** Apparatus in accordance with claim 1, 2 or 3 wherein said message classifier comprises a delay determination module operable to determine for a message which can not be classified, a time period for the reassessment of the message on the basis of an assessment of the likelihood of the message being a wanted message.

**6.** Apparatus in accordance with claim 5, wherein said delay determination module is operable to determine shorter time periods for the reassessment of messages which are more likely to be wanted messages.

**7.** Apparatus in accordance with any of claims 4-6, wherein said message classifier is operable to reassess the possibility of classifying a message after said time period for the reassessment of a message has passed.

**8.** Apparatus in accordance with any of claims 4-6, wherein said message classifier is operable to reassess the possibility of classifying a message during said time period for the reassessment of a message.

**9.** Apparatus in accordance with any preceding claim wherein said update module is operable to update said classification data periodically.

**10.** Apparatus in accordance with any of claims 1-8, wherein said update module is responsive to storage of data in said data store to cause classification data stored in said classification store to be updated.

**11.** Apparatus in accordance with any preceding claim, wherein said update module is operable to receive control signals indicative of user assignment of classification of messages and is responsive to receipt of said signals to utilise the content of said messages to update said classification data stored in said classification store.

**12.** Apparatus in accordance with any preceding claim wherein said update module is operable to receive control signals indicative of receipt of messages by one or more computers and is responsive to receipt of said signals to utilise the content of said received message to update said classification data stored in said classification store.

**13.** Apparatus in accordance with any preceding claim further comprising:

a challenge generator operable to generate and dispatch messages to senders of messages which can not be classified, wherein said update module is responsive to receipt of a response to a message sent by said challenge generator to update said classification data stored in said data store.

**14.** Apparatus in accordance with any of claims 1-12, further comprising:

a challenge generator operable to generate and dispatch messages to senders of messages which can not be classified, wherein said update module is responsive to the failure to receive a response to a message sent by said challenge generator to update said classification data stored in said data store.

**15.** Apparatus in accordance with any preceding claim wherein said classification store is operable to store classification data comprising data indicative of the frequency with which different items of content appear within messages assigned to different classifications, said message classifier being operable to determine the items of content included in messages which are to be classified and to classify a message based on a determined probability of a message being a message assigned to a classification on the basis of the items of content included in said message and the classification data indicative of the frequency with which said items of content appear within messages assigned to different classifications.

**16.** Apparatus in accordance with claim 15 wherein said message classifier is operable to classify a message as having a particular classification if the determined probability of the message having said classification exceeds a threshold probability.

**17.** Apparatus in accordance with claim 15 or 16 wherein said update unit is operable to update data indicative of the frequency with which items of content are included in a message assigned to a particular classification when said classification unit determines that a message including said items of content is a message having said particular classification.

**18.** Apparatus in accordance with claim 17 wherein said classification unit is operable to determine whether a message is a message having a particular classification on the basis of any of the determination of the probability of a message being a message having said classification, receipt of a control signal indicative of user assignment of said classification to said message or receipt of or failure to receive a response from the sender of a message.

**19.** Apparatus in accordance with any of claims 12-17 wherein said classification store is operable to store data indicative of the frequency with which different items of content appear in messages assigned to different classifications by said message classifier and data indicative of the frequency with which items of content appear in messages recently classified by said message classifier, wherein said message classifier is operable to determine estimated frequencies with which items of content appear in correctly classified messages on the basis of the difference between the frequency with which items of content appear in messages assigned to different classification by said message classifier and the frequency with which said items of content appear in messages recently assigned to said classifications by said message classifier.

**20.** Apparatus in accordance with claim 19 wherein said message classifier further comprises a delay determination module operable to determine a delay for reassessment of a message which can not be classified by said message classifier on the basis of the frequency with which items of content included in said message appear in messages recently classified by said message classifier.

**21.** Apparatus in accordance with any of claims 1-14, wherein said message classifier is operable to identify for a message, a set of similar messages containing similar items of content to said message, and to classify said message based upon classification data relating to said set of similar messages.

**22.** Apparatus in accordance with claim 21 wherein said classification store is configured to store classification data relating to a set of similar messages comprising data indicative of a calculated average probability of message in said set being a message which should be classified as having a particular classification.

**23.** Apparatus in accordance with claim 21 wherein said classification store is configured to store classification data relating to a set of similar messages comprising data indicative of the proportion of messages in said set assigned a particular classification by users.

**24.** Apparatus in accordance with claim 21, wherein said classification store is configured to store classification data relating to a set of similar messages comprising data indicative of the proportion of messages sent to senders of messages in said set which resulted in receipt of responses.

**25.** Apparatus in accordance with claim 21 wherein said classification store is configured to store classification data relating to a set of similar messages comprising data indicative of the number of messages in said set addressed to one or more predefined addresses.

**26.** Apparatus in accordance with any preceding claim, wherein said items of content comprise data identifying strings of characters included in said messages.

**27.** Apparatus in accordance with any preceding claim wherein said items of content comprise data identifying words or phrases included in said messages.

**28.** Apparatus in accordance with any preceding claim wherein said items of content include data identifying the sender or intended recipient of said messages.

**29.** Apparatus in accordance with any preceding claim further comprising:

a dispatch module for dispatching messages wherein said dispatch module is operable to control dispatch messages based upon the classification of messages by said message classifier.

**30.** Apparatus in accordance with any of claims 1-28 further comprising:

a dispatch module operable to dispatch messages classified by said message classifier as being of a particular category.

**31.** Apparatus in accordance with claim 30 further comprising:

an archive store for storing messages classified by said message classifier as being another category.

**32.** A distributed computer system for classifying electronic mail messages comprising:

apparatus for classifying messages in accordance with any of claims 29-31;
one or more user terminals operable to receive messages; and
a communication network for transmitting messages between said apparatus and said user terminals wherein said communications network is operable to send data indicative of the content of messages addressed to said user terminals to said apparatus for classifying messages for storage in said data store, said apparatus for classifying messages being operable to control dispatch of messages to said user terminals based on the classification of the messages by said message classifier.

**33.** A distributed computer system in accordance with claim 32, wherein said one or more user terminals are operable to generate user interface displays enabling a user to view received messages and assign classifications to received messages, said user terminals being responsive to user assignment of a classification to a message to cause a control signal indicative of user assigned classification of a message to be sent via said communications network to said apparatus for classifying messages.

**34.** A distributed computer system in accordance with claim 32 or 33 further comprising:

one or more computers operable to receive messages and to send control signals indicative of classifications assigned to said received messages and the content of said messages to said apparatus for classifying messages via said communication network.

**35.** A distributed computer system in accordance with any of claims 32-34 further comprising:

one or more sender computers operable to generate and send messages addressed to said user terminals via said communications network.

**36.** A distributed computer system for classifying electronic messages comprising:

a communications network;
a plurality of apparatus for classifying messages in accordance with any of claims 29-31, operable to receive data indicative of the content of messages transmitted via said communication network; and
a central classification store connected to said communications network and operable to receive control signals from said plurality of apparatus for classifying messages, wherein said central classification store is operable to store classification data and is responsive to control signals received from apparatus for classifying messages to dispatch to an apparatus from which a control signal is received a copy of said stored classification data, said update module of said apparatus being responsive to receipt of classification data to update classification data stored in said classification store of said apparatus utilising said received classification data.

**37.** A distributed computer system in accordance with claim 36, wherein said apparatus for classifying messages are responsive to the determination that a message can not be classified to send a control signal to said central classification store to request a copy of the classification data stored by said central classification store.

**38.** A distributed computer system in accordance with claim 36 or 37, wherein said apparatus for classifying messages are responsive to the determination that a message can not be classified to send a control signal to said central classification store indicative of the content of said message and said central classifications store is operable to update stored classification data in response to receipt of said control signals.

**39.** A distributed computer system in accordance with claim 36, 37 or 38 wherein said one or more user terminals are operable to generate user interface displays enabling a user to view received messages and assign a classification to received messages, said user terminals being responsive to user assignment of a classification to a message to cause a control signal indicative of user assignment of a classification to a message to be sent via said communications network to said central classification store, said central classification store being operable to update stored classification data in response to receipt of said control signals.

**40.** A distributed computer system in accordance with any of claims 36-39, further comprising:

one or more computers operable to receive messages and to send control signals indicative of said messages having an assigned classification to said central classification store, said central classification store being operable to update stored classification data in response to receipt of said control signals.

**41.** A method classifying electronic messages, comprising:

storing classification data;
receiving data indicative of the content of a message;
utilising stored classification data to determine whether a message for which data indicative of its content has been received can be classified based on the currently stored classification data; and
if a message can not be classified utilising the currently stored classification data, reassessing the message for which data indicative of content has been received after a delay utilising stored classification data as updated during said delay.

**42.** A method in accordance with claim 41 wherein said receiving comprises:

receiving a copy of said message; and
generating data indicative of items of content in said received message.

**43.** A method in accordance with claim 41 or 42 further comprising:

assigning a default classification to a message which can not be classified utilising stored classification data as updated within a preset time period.

**44.** A method in accordance with claim 41, 42 or 43 further comprising determining a delay for a message on the basis of the extent stored classification data is likely to be updated.

**45.** A method in accordance with claim 41, 42 or 43 further comprising determining a delay for a message on the basis of an assessment of the likelihood of the message being a wanted message.

**46.** A method in accordance with claim 45 wherein the time period determined for a message is shorter for reassessment of messages which are more likely to be wanted messages.

**47.** A method in accordance with any of claims 44-46 further comprising:

reassessing the possibility of classifying a message after said determined delay has passed.

**48.** A method in accordance with any of claims 44-46 further comprising:

reassessing the possibility of classifying a message during said determined delay.

**49.** A method in accordance with any of claims 41-48 further comprising updating said stored classification data periodically.

**50.** A method in accordance with any of claims 41-48 further comprising:

updating classification data in response to receiving data indicative of the content of a message.

**51.** A method in accordance with any of claims 41-49 further comprising:

receiving a control signal indicative of user assignment of a classification to a message; and
updating said stored classification data in response to receipt of said control signal.

**52.** A method in accordance with any of claims 41-51 further comprising:

receiving data indicative of the content of a message from one or more pre identified computers; and
updating said classification data in response to receipt of said data.

**53.** A method in accordance with any of claims 41-52 further comprising:

dispatching messages to senders of messages which can not be classified; and
updating said stored classification data in response to receipt of a response from a sender of a message.

**54.** A method in accordance with any of claims 41-52 further comprising:

dispatching a message to a sender of a message which can not be classified; and
responding to failure to receive a response to a message by updating said stored classification data.

**55.** A method in accordance with any of claims 41-54 wherein said classification data comprises data indicative of the frequency with which different items of content appear in messages assigned to different classifications, said method further comprising:

utilising said stored classification data to determine the probability of a message being classified being a message assigned different classifications on the basis of the items of content included in said message.

**56.** A method in accordance with claim 55 wherein said classification of a message is performed by comparing a calculated probability of a message being a message assigned a particular classification with a threshold probability.

**57.** A method in accordance with claim 55 or 56 further comprising:

updating stored classification data indicative of the frequency of different items of content being included in a message assigned a particular classification in response to determining that a message including said items of content is a message assigned to said classification.

**58.** A method in accordance with claim 57 wherein said determination of whether a message is a message assigned to a particular classification is made on the basis of any of: the determination of the probability of a message being assigned to said classification, receipt of a control signal indicative of user assignment of said message to a particular classification or receipt of a response from the sender of a message assigned to a particular classification.

**59.** A method in accordance with any of claims 54-58 wherein said classification data comprises data indicative of the frequency with which different items of content appear in classified messages and data indicative of the frequency with which different items of content appear in recently classified messages, said method further comprising:

determining estimated frequencies with which different items of content appear in messages correctly assigned different classifications on the basis of the difference between the frequency with which different items of content appear in classified messages and the frequency with which different items of content appear in recently classified messages.

**60.** A method in accordance with claim 59 further comprising: determining a delay for reassessing a message which can not be classified utilising the currently stored classification data, utilising said stored data indicative of the frequency with which different items of content appear in messages recently classified as being in different categories.

**61.** A method in accordance with any of claims 41-54 further comprising:

identifying for a message a set of similar messages containing similar content to said message; and
classifying said message based on classification data relating to said set of similar messages.

**62.** A method in accordance with claim 61 wherein said classification data relating to a set of similar messages comprises data indicative of the calculated average probability of a message in said set being a message in a particular category.

**63.** A method in accordance with claim 61 wherein said classification data relating to a set of similar messages comprises data indicative of the proportion of messages in said set assigned a particular category by users.

**64.** A method in accordance with claim 61 wherein said classification data relating to a set of similar messages comprises data indicative of the proportion of messages sent to senders of messages in said set which result in receipt of responses.

**65.** A method in accordance with claim 61 wherein said classification data relating to a set of similar messages comprises data indicative of the number of messages in said set addressed to one or more predefined addresses.

**66.** A method in accordance with any of claims 41-65 further comprising:

storing messages classified as belonging to certain categories.

**67.** A method in accordance with any of claims 41-66 further comprising:

dispatching messages classified as belonging to certain categories.

**68.** A method in accordance with claim 67 further comprising dispatching messages classified as belonging to certain categories to a different destination to messages classified as belonging to other categories.

**69.** A method of filtering electronic messages comprising:

receiving an electronic message;
classifying a received message; and
selectively performing a control function on a received message on the basis of said classification, wherein said classification of a message includes delaying classification of a message and utilising feedback received on similar messages during said delay period to classify said message.

**70.** Apparatus for filtering electronic message comprising:

means for receiving an electronic message;
means for classifying a received message; and
means for selectively applying a control function to a received message on the basis of said classification wherein said classification means is operable to classify messages by delaying classification of a message and utilising feedback received on similar messages during said delay period to classify a said message.

**71.** Apparatus for classifying messages comprising:

a receiver operable to receive data indicative of items of content included in messages to be classified;
a classification store configured to store classification data; and
a message classifier operable to utilise stored classification data to classify messages including items of content as identified by data received by said receiver, wherein said classification store is configured to store data indicative of the content of messages of different categories and data indicative of the content of messages not having a confirmed category, said message classifier being operable to utilise said classification data indicative of the content of messages not having a confirmed category to model an expected variation in the data indicative of the content of messages in different categories and utilise said modelled variation to classify messages including items of content identified as received by said receiver.

**72.** Apparatus in accordance with claim 71, wherein said receiver is operable to receive as data indicative of items of content included in messages, copies of the messages to be classified.

**73.** Apparatus in accordance with claim 71 or 72, further comprising an update module operable to update classification data stored in said classification store.

**74.** Apparatus in accordance with claim 73, wherein said update module is operable to receive control signals indicative of user assignment of classification of messages and is responsive to receipt of said signals to utilise the content of said classified messages to update said classification data stored in said classification store.

**75.** Apparatus in accordance with claim 73 or 74, wherein said update module is operable to receive control signals indicative of the receipt of messages by one or more computers and is responsive to receipt of said signals to utilise the content of said received messages to update said classification data indicative of the content of messages of different categories stored in said classification store.

**76.** Apparatus in accordance with any of claims 71-75, wherein said message classifier is operable to store data indicative of the timing of messages and model an expected variation in data indicative of the content of messages utilising said data indicative of timing.

**77.** Apparatus in accordance with claim 76, wherein said message classifier is operable to model expected variation in data indicative of the content of messages in different categories such that a greater proportion of the content of messages not having a confirmed category is assumed to be indicative of content of messages having a particular category as time passes.

**78.** Apparatus in accordance with any of claims 71-77, wherein said message classifier is operable to store data indicative of the proportion of messages assigned to different categories by users and is operable to model the expected variation in data indicative of the content of messages in different categories utilising said stored data.

**79.** Apparatus in accordance with any of claims 71-78, wherein said message classifier is operable to determine whether a message including items of content identified by data received by said receiver can be classified utilising the data currently stored in the classification store and if a message can not be classified utilising the currently stored classification data to reassess the classification of a message including items of content identified by data received by said receiver after a delay utilising the classification data stored in said classification store after said delay as updated by said update module.

**80.** Apparatus in accordance with claim 79, wherein said message classifier is operable to assign a default classification to messages which can not be classified utilising classification data stored within said data store as updated by said update module within a preset time period.

**81.** Apparatus in accordance with claim 79 or 80, wherein said message classifier is operable to determine whether a message can be classified within a preset time period based on a modelled expected variation in said classification data.

**82.** A method of classifying electronic messages comprising:

storing classification data indicative of the content of messages of different categories and data indicative of the content of messages not having a confirmed category;
receiving data indicative of items of content included in messages to be classified;
modelling an expected variation in the data indicative of the content of messages in different categories utilising said stored classification data indicative of the content of messages not having a confirmed category; and
classifying messages including items of content as identified by received data utilising classification data and said modelled variation.

**83.** A method in accordance with claim 82, wherein said data indicative of items of content included in messages comprise copies of the messages to be classified.

**84.** A method in accordance with claim 82 or 83, further comprising updating classification data stored in said classification store.

**85.** A method in accordance with claim 84, further comprising:

receiving control signals indicative of user assignment of classification of messages; and
utilising the content of said classified messages to update said stored classification data.

**86.** A method in accordance with claim 84 or 85, further comprising:

receiving control signals indicative of the receipt of messages by one or more computers; and
utilising the content of said received messages to update said stored classification data indicative of the content of messages of different categories.

**87.** A method in accordance with any of claims 82-86, further comprising:

storing data indicative of the timing of messages; and
modelling an expected variation in data indicative of the content of messages utilising said data indicative of timing.

**88.** A method in accordance with claim 87, wherein said modelling an expected variation in data indicative of the content of messages in different categories is such that a greater proportion of the content of messages not having a confirmed category is assumed to be indicative of content of messages having a particular category as time passes.

**89.** A method in accordance with any of claims 82-86, further comprising:

storing data indicative of the proportion of messages assigned to different categories by users; and
modelling the expected variation in data indicative of the content of messages in different categories utilising said stored data.

**90.** A method in accordance with any of claims 82-89, further comprising:

determining whether a message including items of content identified by received data can be classified utilising currently stored data; and
if a message can not be classified utilising the currently stored data, reassessing the classification of a message including items of content identified by received data after a delay utilising updated stored data after said delay.

**91.** A method in accordance with claim 90, further comprising:

assigning a default classification to messages which can not be classified utilising stored data within a preset time period.

**92.** A method in accordance with claim 91, further comprising:

determining whether a message can be classified within a preset time period based on a modelled expected variation in said classification data.

**93.** A method of classifying electronic messages comprising:

storing classification data;
receiving data indicative of the content of a message to be classified; and
classifying a message for which data indicative of content is received utilising said stored classification data and a model of estimated expected changes to said classification data modelled to account for absence of feed back on one or more messages.

**94.** A method in accordance with claim 93 further comprising:

storing data indicative of the content of one or more messages for which no feedback has been received; and
modelling said expected changes utilising said stored data.

**95.** A method in accordance with claim 93 or 94 further comprising:

receiving feedback on one or more messages; and
updating said classification data in response to receiving said feedback.

**96.** Apparatus for classifying electronic messages comprising:

means for storing classification data;
means for receiving data indicative of the content of a message to be classified; and
means for classifying a message for which data indicative of content is received by said receiving means utilising classification data stored by said storing means and a model of estimated expected changes to said classification data modelled to account for absence of feed back on one or more messages.

**97.** Apparatus in accordance with claim 96 further comprising:

means for storing data indicative of the content of one or more messages for which no feedback has been received; and
means for modelling said expected changes utilising data indicative of the content of one or more messages for which no feedback has been received.

**98.** Apparatus in accordance with claim 96 or 97 further comprising:

means for receiving feedback on one or more messages; and
means for updating classification data stored by said storing means in response to receiving said feedback.

**99.** A data carrier storing computer implementable instructions for generating within a programmable computer message apparatus in accordance with any of claims 1 to 31 or 70 to 81 or 96 to 98.

**100.** A data carrier storing computer implementable instructions for causing a programmable computer to perform a method in accordance with any of claims 41 to 69 or 82 to 95.

**101.** A data carrier in accordance with claim 99 or 100, comprising a computer disc.

**102.** A data carrier in accordance with claim 99 or 100, comprising an electric signal transferred via the Internet.

**103.** A computer disc in accordance with claim 101, wherein said computer disc comprises an optical, magnetooptical or magnetic disc.

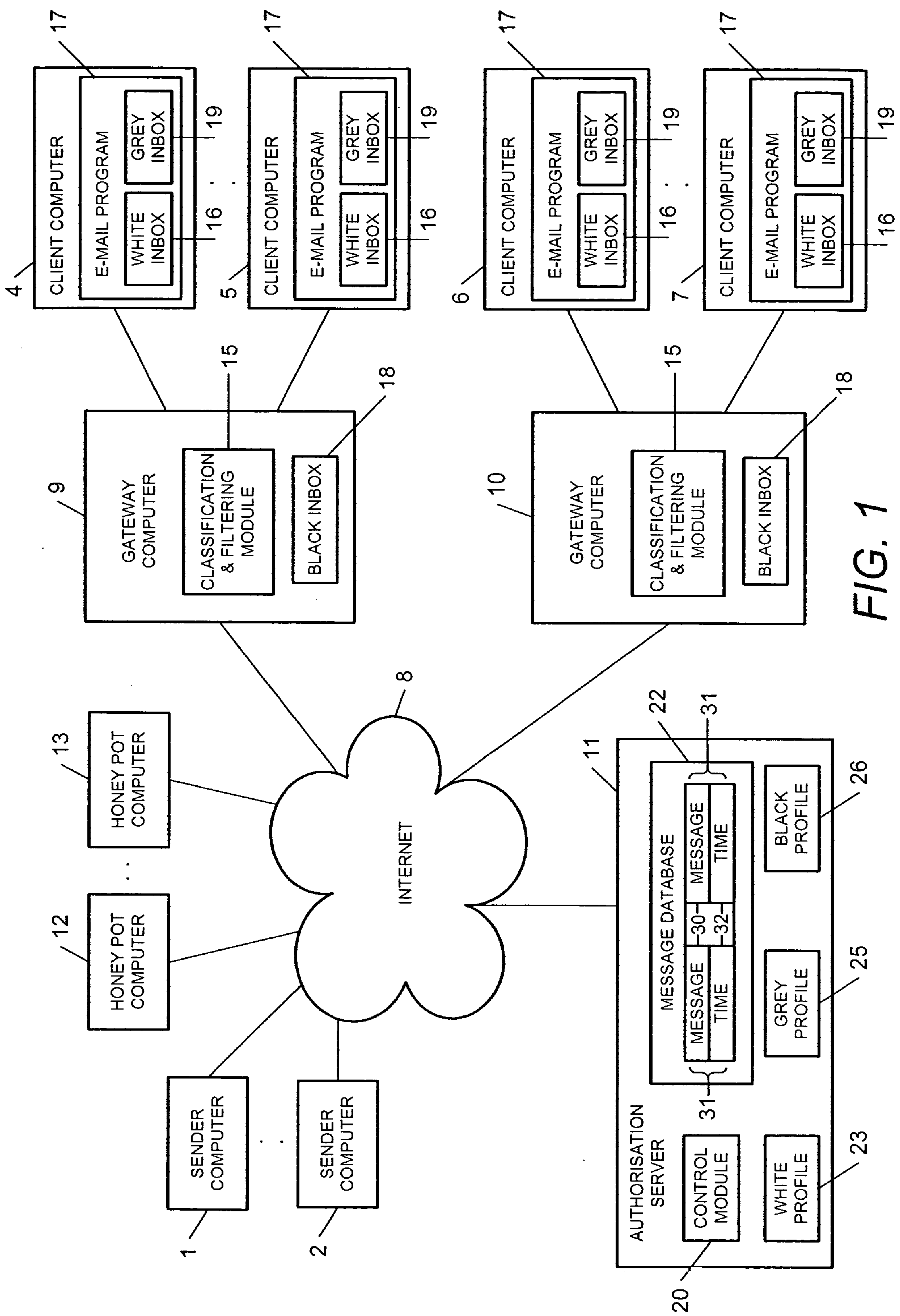
CLIENT COMPUTER
E-MAIL PROGRAM
WHITE INBOX
GREY INBOX
GATEWAY COMPUTER
CLASSIFICATION & FILTERING MODULE
BLACK INBOX
INTERNET
HONEY POT COMPUTER
SENDER COMPUTER
AUTHORISATION SERVER
CONTROL MODULE
MESSAGE DATABASE
MESSAGE
TIME
WHITE PROFILE
GREY PROFILE
BLACK PROFILE
1
2
4
5
6
7
8
9
10
11
12
13
15
16
17
18
19
20
22
23
25
26
30
31
32

FIG. 1

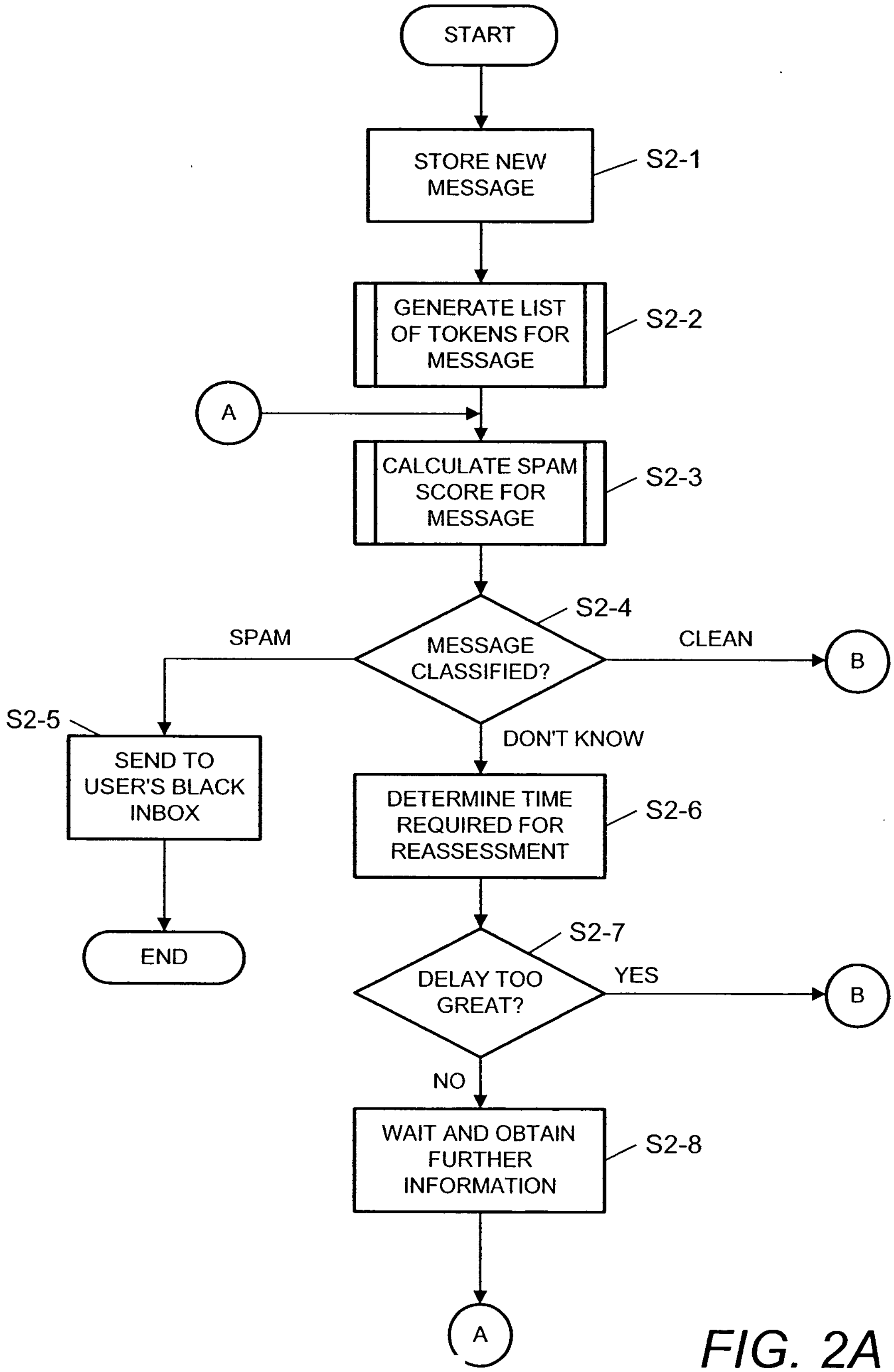
START
STORE NEW MESSAGE
S2-1
GENERATE LIST OF TOKENS FOR MESSAGE
S2-2
A
CALCULATE SPAM SCORE FOR MESSAGE
S2-3
S2-4
SPAM
MESSAGE CLASSIFIED?
CLEAN
B
S2-5
SEND TO USER'S BLACK INBOX
END
DON'T KNOW
DETERMINE TIME REQUIRED FOR REASSESSMENT
S2-6
S2-7
DELAY TOO GREAT?
YES
B
NO
WAIT AND OBTAIN FURTHER INFORMATION
S2-8
A

*FIG. 2A*

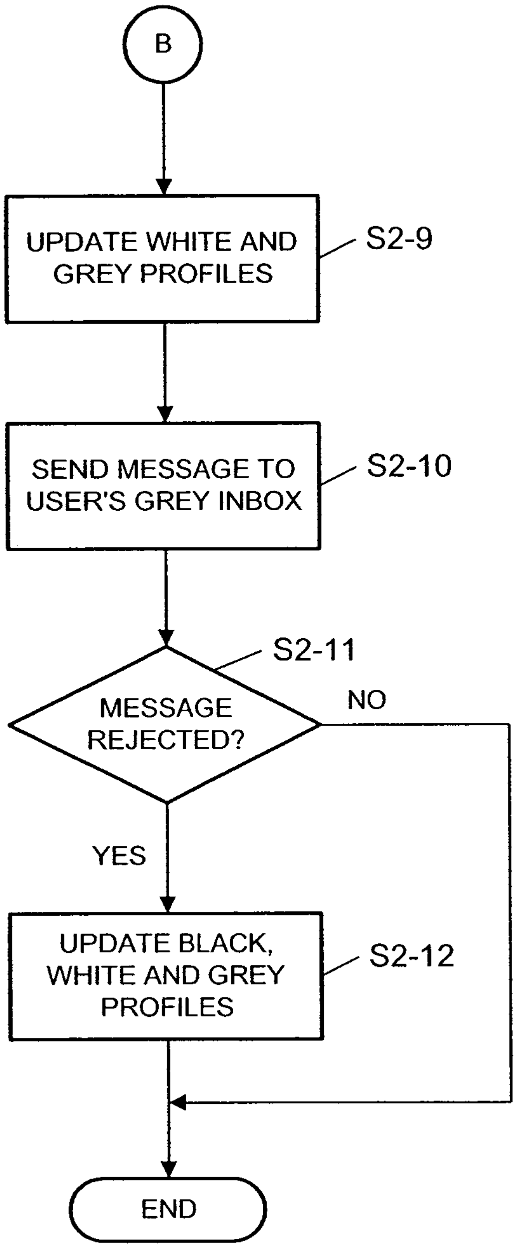
B
UPDATE WHITE AND GREY PROFILES
S2-9
SEND MESSAGE TO USER'S GREY INBOX
S2-10
S2-11
MESSAGE REJECTED?
NO
YES
UPDATE BLACK, WHITE AND GREY PROFILES
S2-12
END

FIG. 2B

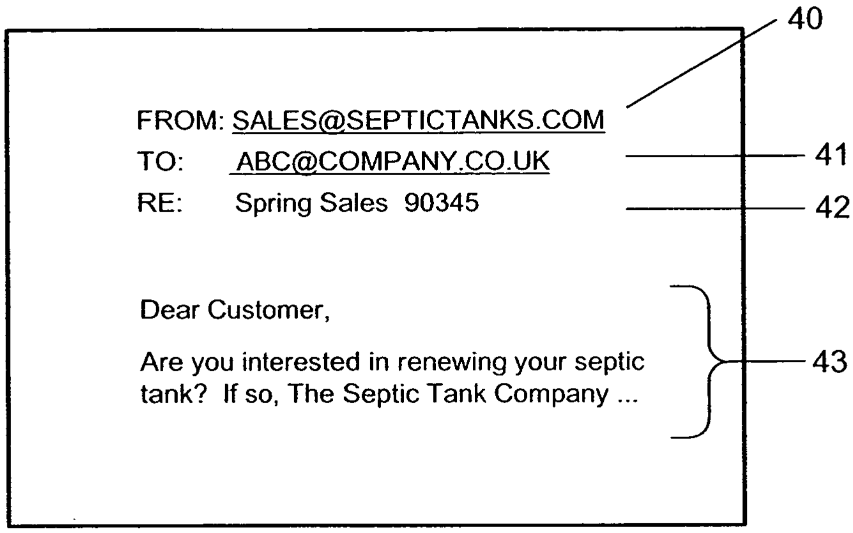
40
FROM: SALES@SEPTICTANKS.COM
TO: ABC@COMPANY.CO.UK
RE: Spring Sales 90345
41
42
Dear Customer,
Are you interested in renewing your septic tank? If so, The Septic Tank Company ...
43

FIG. 3A

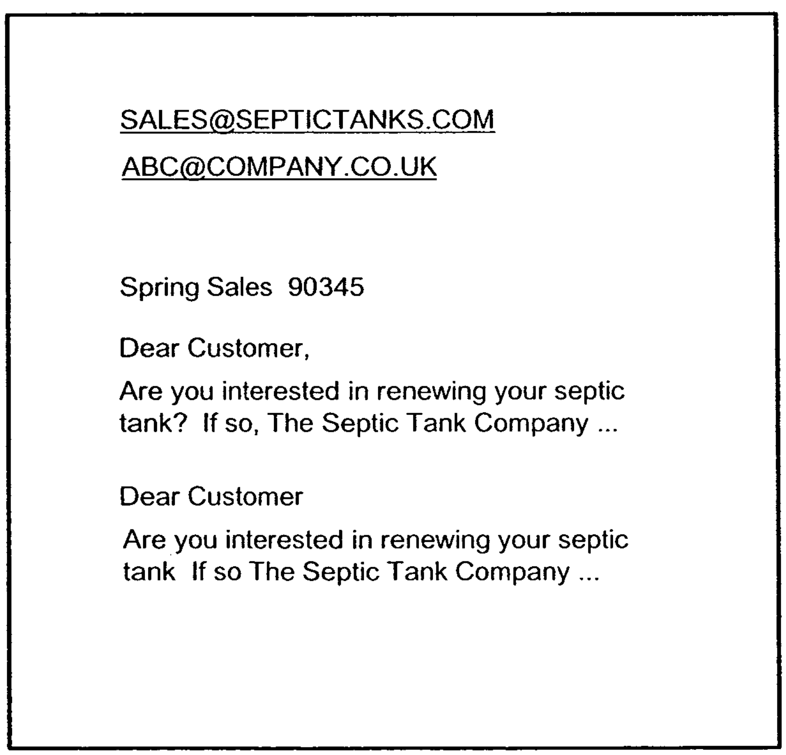
SALES@SEPTICTANKS.COM
ABC@COMPANY.CO.UK
Spring Sales 90345
Dear Customer,
Are you interested in renewing your septic tank? If so, The Septic Tank Company ...
Dear Customer
Are you interested in renewing your septic tank If so The Septic Tank Company ...

FIG. 3B

| | |
|---|---|
| SALES@SEPTICTANKS.COM | - 1259713 |
| ABC@COMPANY.CO.UK | - 8511311 |
| Spring | - 1345510 |
| SPRING | - 0212567 |
| Sales | - 6898979 |
| SALES | - 3703401 |
| 90345 | - 0124586 |
| . | |
| . | |
| . | |
| Are you interested | - 1175976 |
| in renewing your septic ... | - 1238977 |
| . | |
| . | |
| . | |

*FIG. 3C*

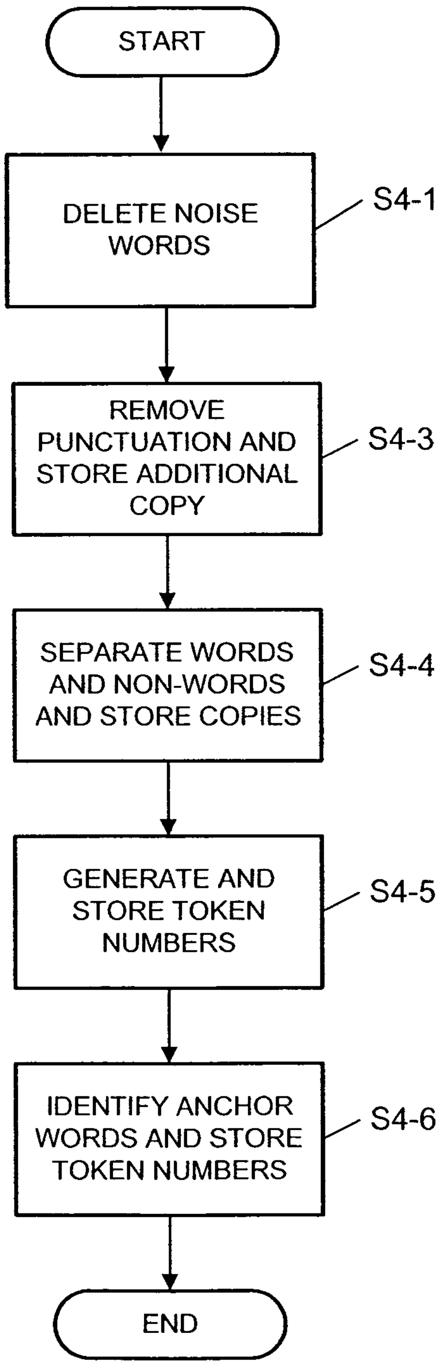
START
DELETE NOISE WORDS
S4-1
REMOVE PUNCTUATION AND STORE ADDITIONAL COPY
S4-3
SEPARATE WORDS AND NON-WORDS AND STORE COPIES
S4-4
GENERATE AND STORE TOKEN NUMBERS
S4-5
IDENTIFY ANCHOR WORDS AND STORE TOKEN NUMBERS
S4-6
END

FIG. 4

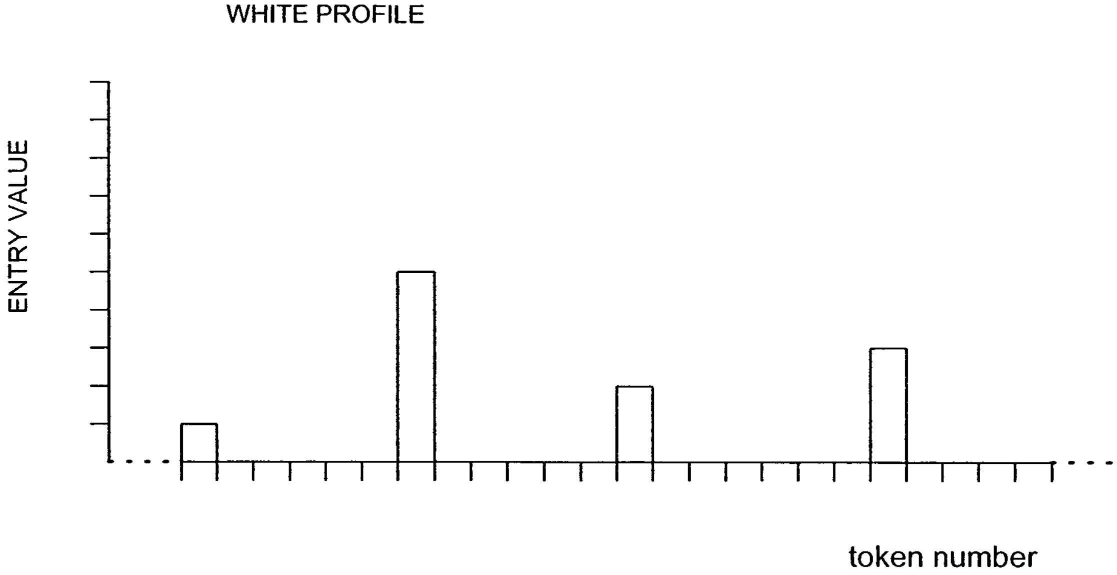
WHITE PROFILE
ENTRY VALUE
token number

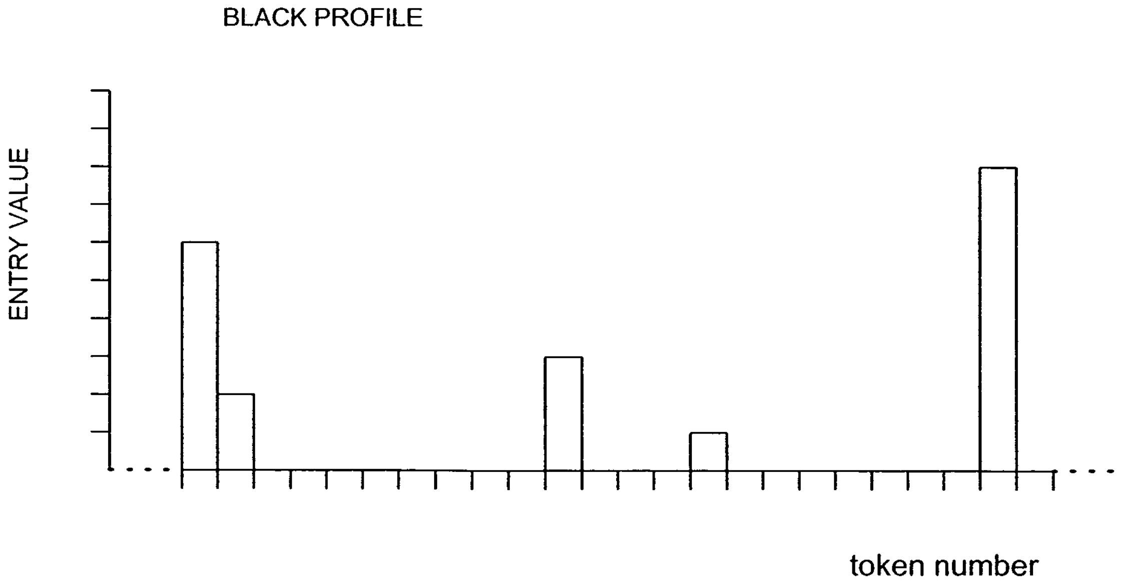
BLACK PROFILE
ENTRY VALUE
token number

FIG. 5

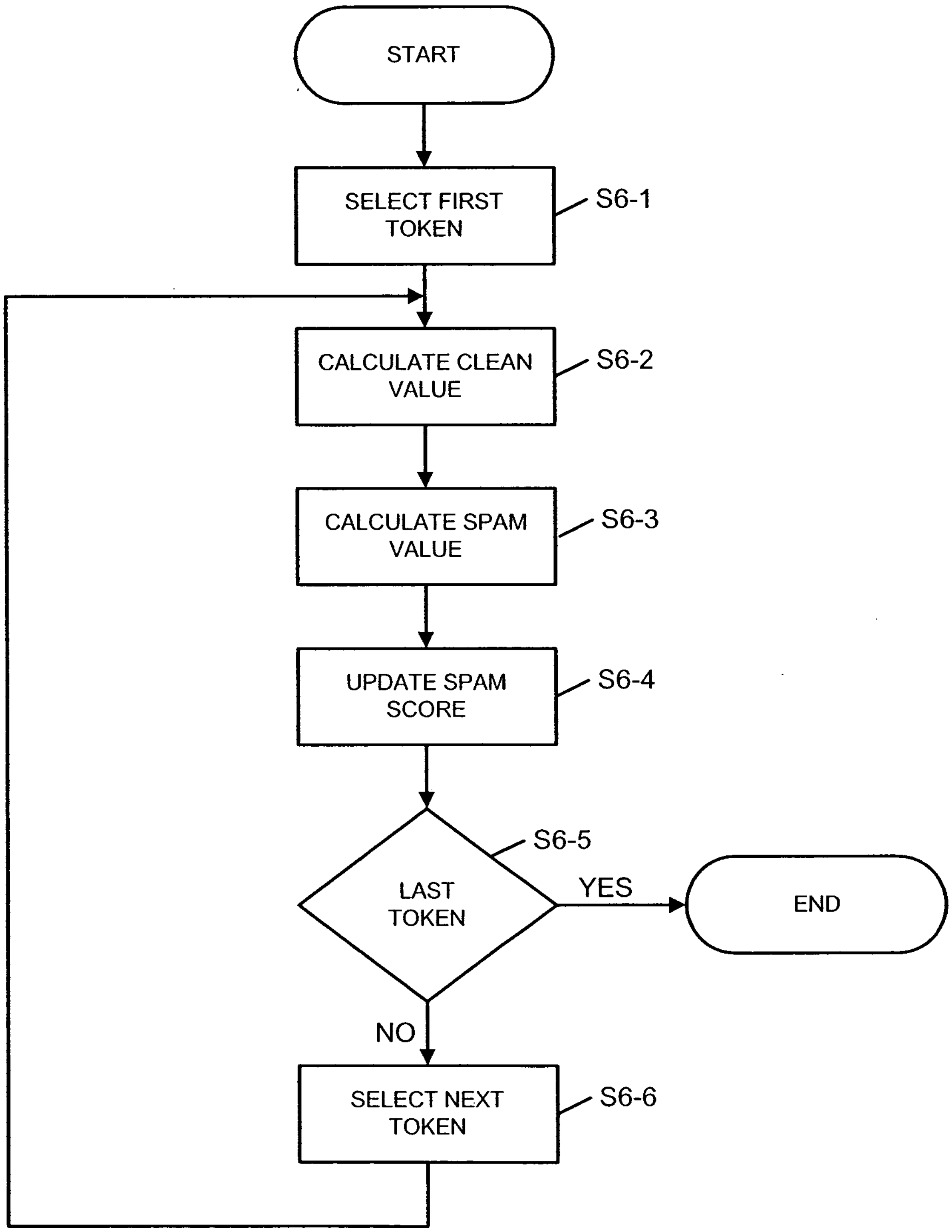
START
SELECT FIRST TOKEN
S6-1
CALCULATE CLEAN VALUE
S6-2
CALCULATE SPAM VALUE
S6-3
UPDATE SPAM SCORE
S6-4
LAST TOKEN
S6-5
YES
END
NO
SELECT NEXT TOKEN
S6-6

FIG. 6

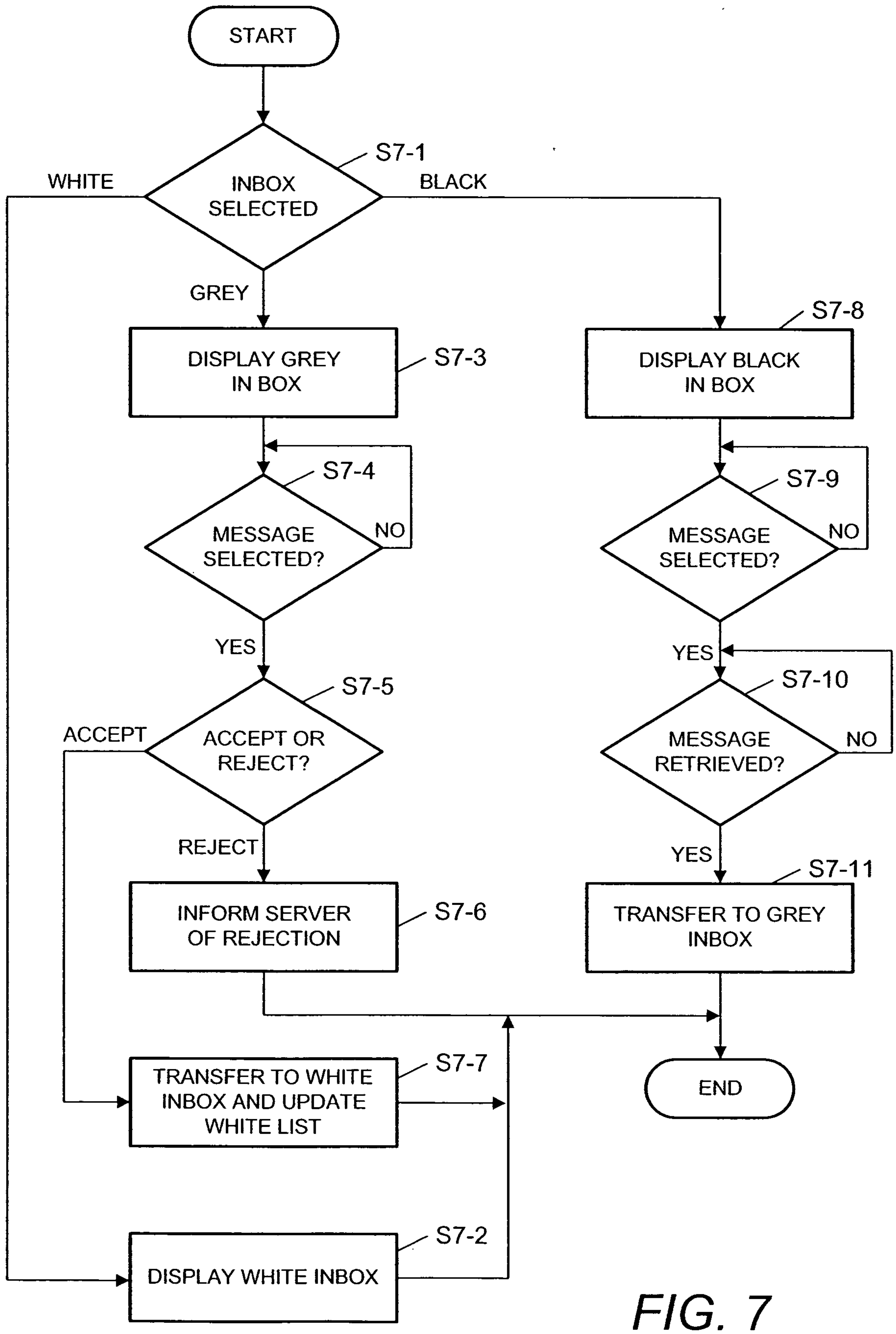
START
S7-1
INBOX SELECTED
WHITE
BLACK
GREY
DISPLAY GREY IN BOX
S7-3
S7-8
DISPLAY BLACK IN BOX
S7-4
MESSAGE SELECTED?
NO
YES
S7-9
MESSAGE SELECTED?
NO
YES
S7-5
ACCEPT OR REJECT?
ACCEPT
REJECT
S7-10
MESSAGE RETRIEVED?
NO
YES
INFORM SERVER OF REJECTION
S7-6
S7-11
TRANSFER TO GREY INBOX
TRANSFER TO WHITE INBOX AND UPDATE WHITE LIST
S7-7
END
DISPLAY WHITE INBOX
S7-2

FIG. 7

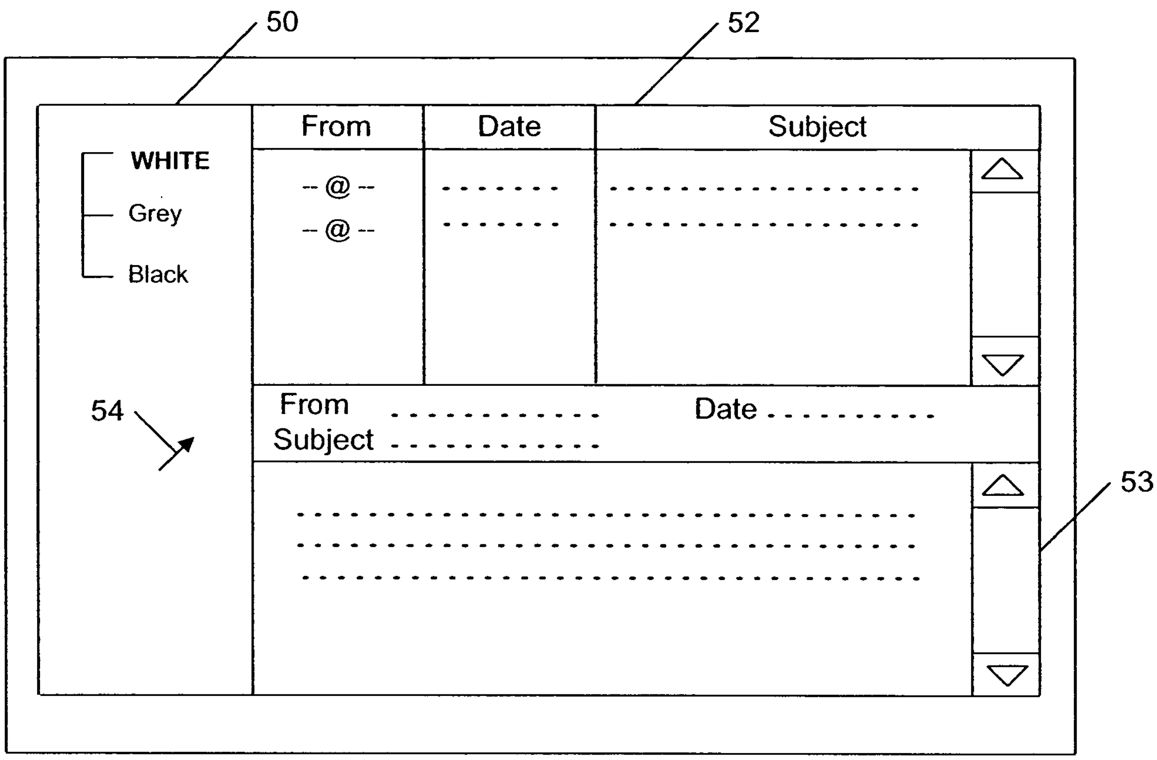
50
52
From
Date
Subject
WHITE
Grey
Black
-- @ --
-- @ --
54
From
Date
Subject
53

FIG. 8A

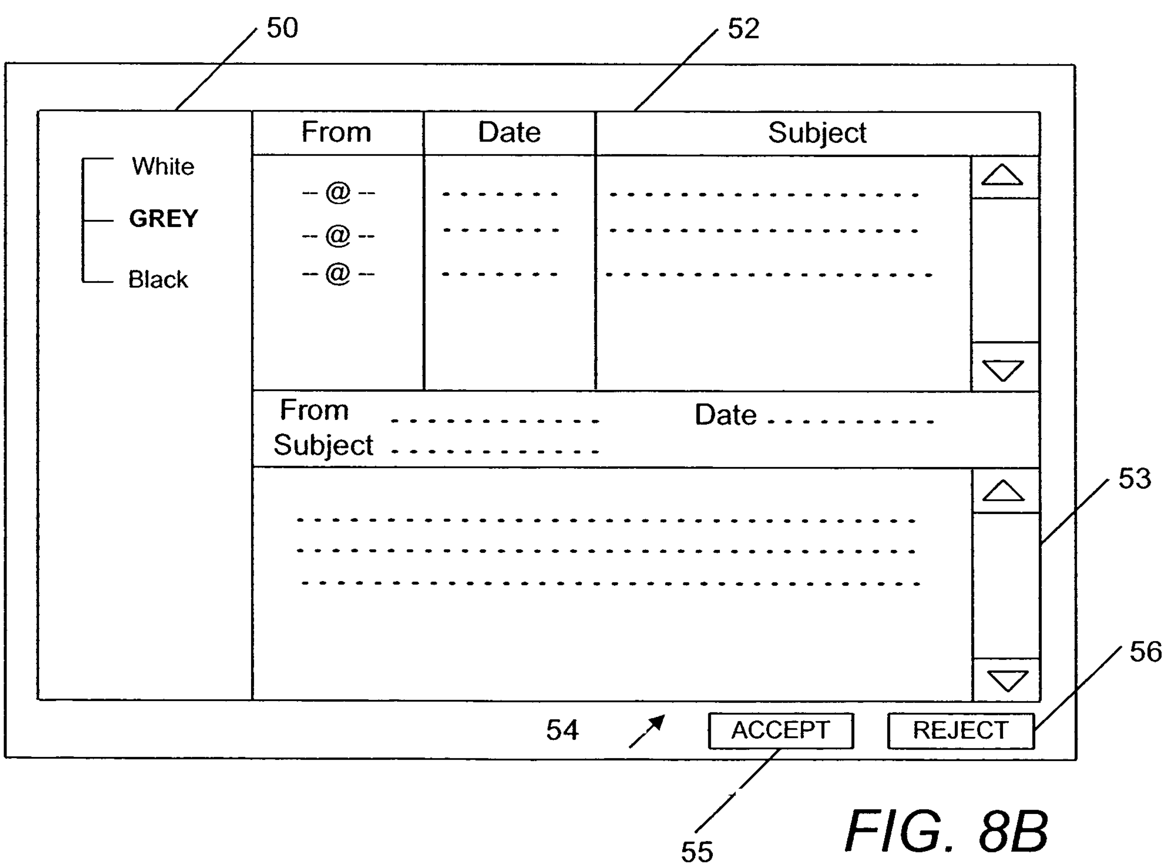
50
52
From
Date
Subject
White
GREY
Black
-- @ --
-- @ --
-- @ --
From
Date
Subject
53
56
54
ACCEPT
REJECT
55

FIG. 8B

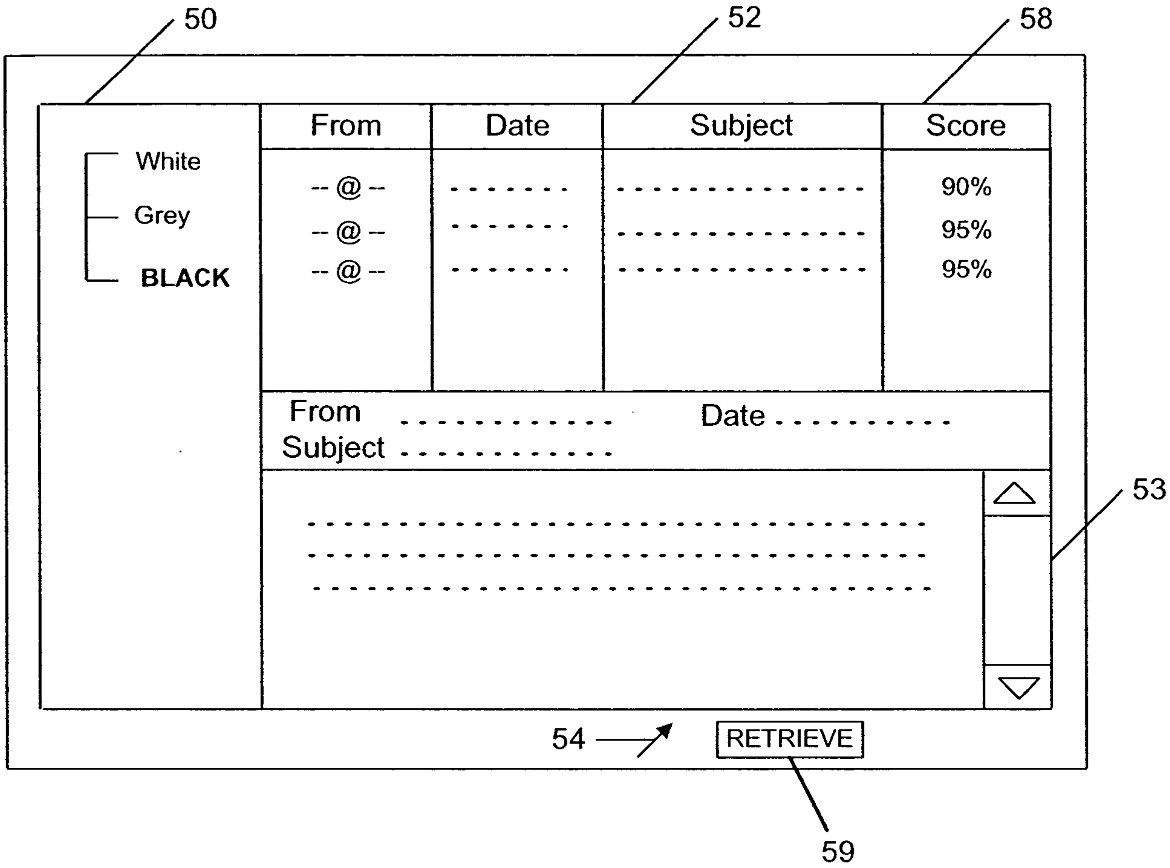
50
52
58
From
Date
Subject
Score
White
Grey
BLACK
-- @ --
-- @ --
-- @ --
90%
95%
95%
From
Date
Subject
53
54
RETRIEVE
59

FIG. 8C

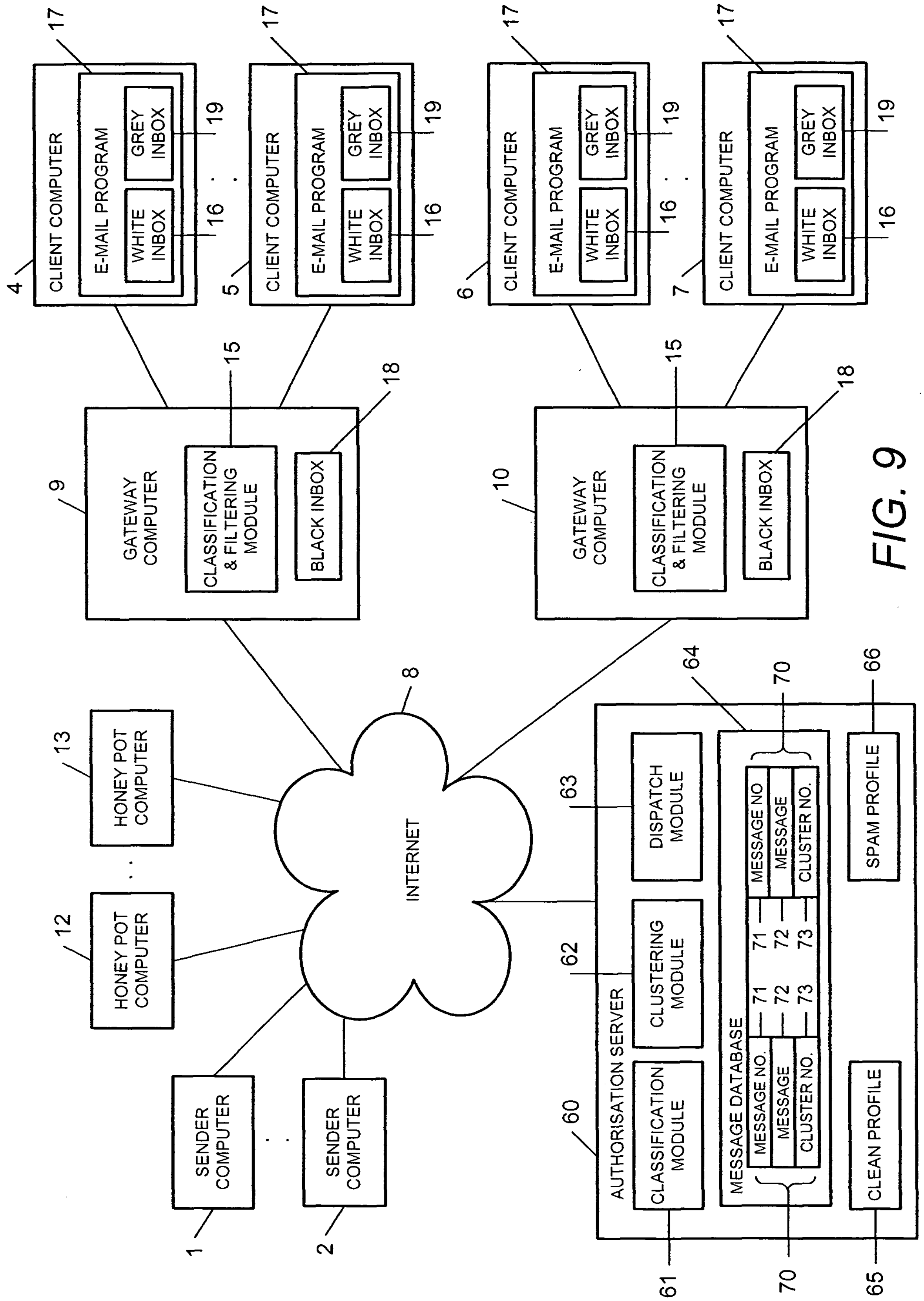
CLIENT COMPUTER
E-MAIL PROGRAM
WHITE INBOX
GREY INBOX
GATEWAY COMPUTER
CLASSIFICATION & FILTERING MODULE
BLACK INBOX
HONEY POT COMPUTER
SENDER COMPUTER
INTERNET
AUTHORISATION SERVER
CLASSIFICATION MODULE
CLUSTERING MODULE
DISPATCH MODULE
MESSAGE DATABASE
MESSAGE NO.
MESSAGE
CLUSTER NO.
CLEAN PROFILE
SPAM PROFILE
1
2
4
5
6
7
8
9
10
12
13
15
16
17
18
19
60
61
62
63
64
65
66
70
71
72
73

FIG. 9

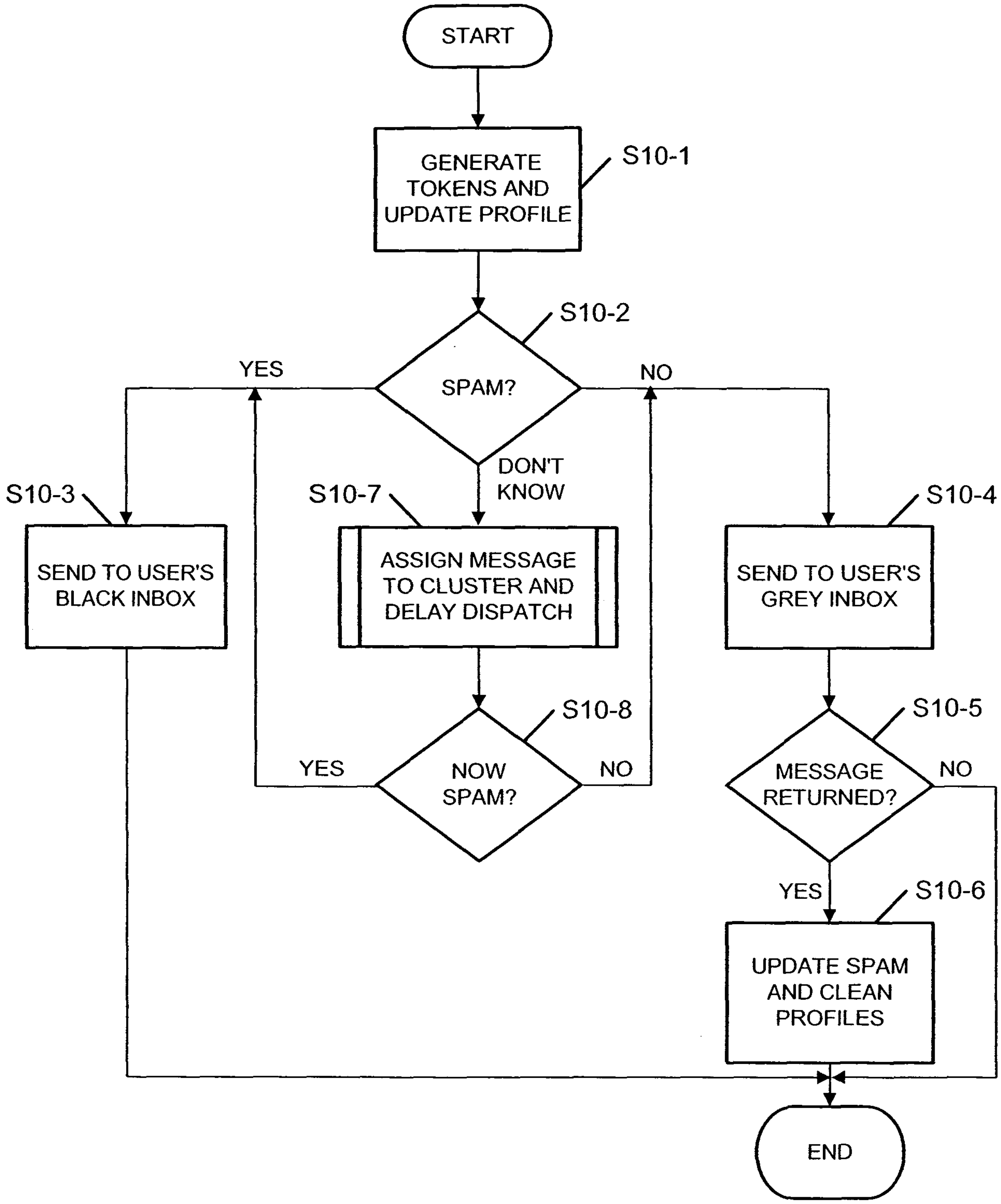
START
GENERATE TOKENS AND UPDATE PROFILE
S10-1
S10-2
SPAM?
YES
NO
DON'T KNOW
S10-3
SEND TO USER'S BLACK INBOX
S10-7
ASSIGN MESSAGE TO CLUSTER AND DELAY DISPATCH
S10-4
SEND TO USER'S GREY INBOX
S10-8
NOW SPAM?
YES
NO
S10-5
MESSAGE RETURNED?
NO
YES
S10-6
UPDATE SPAM AND CLEAN PROFILES
END

*FIG. 10*

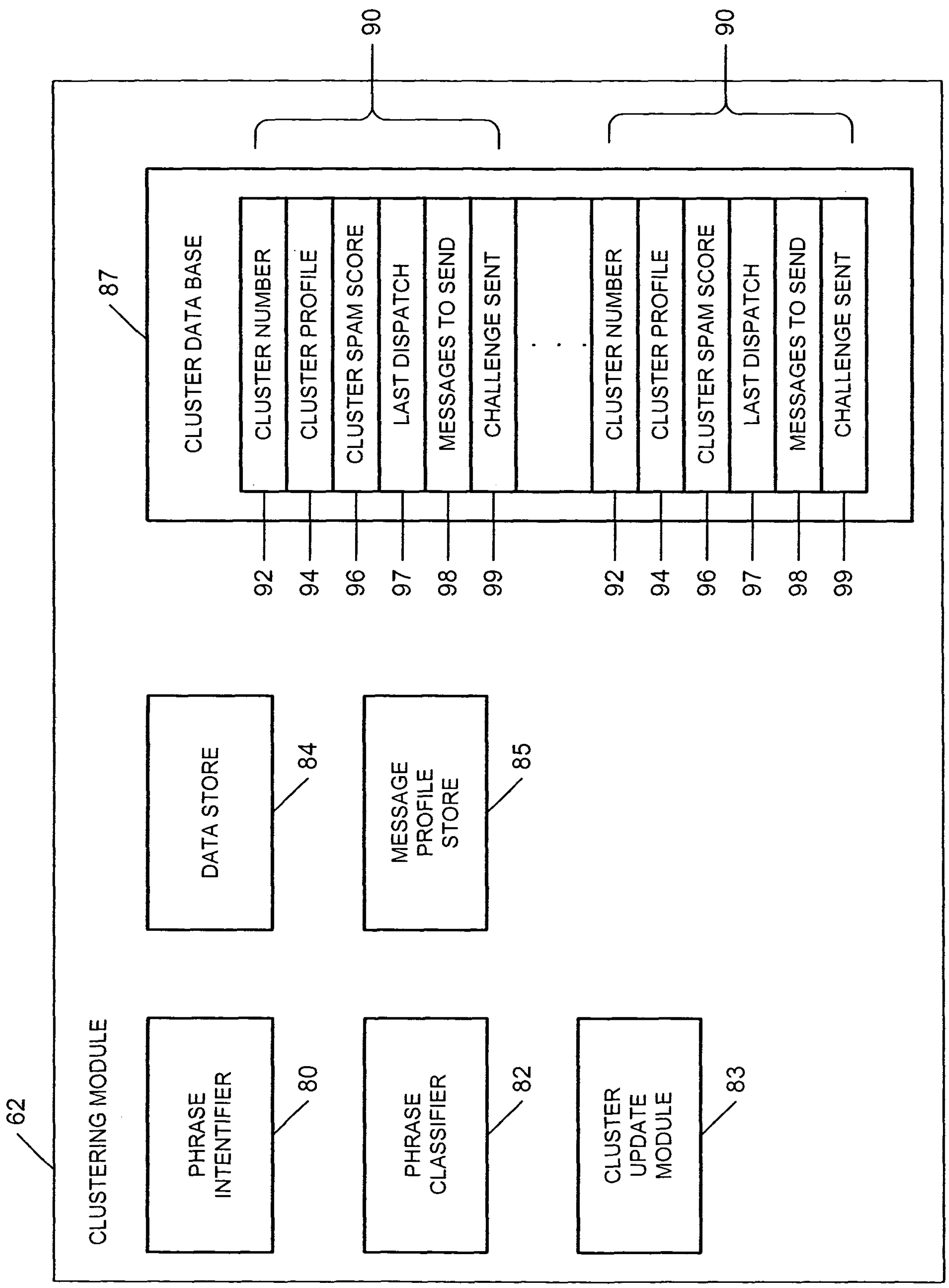

62
CLUSTERING MODULE
PHRASE INTENTIFIER
80
PHRASE CLASSIFIER
82
CLUSTER UPDATE MODULE
83
DATA STORE
84
MESSAGE PROFILE STORE
85
87
CLUSTER DATA BASE
90
CLUSTER NUMBER
CLUSTER PROFILE
CLUSTER SPAM SCORE
LAST DISPATCH
MESSAGES TO SEND
CHALLENGE SENT
92
94
96
97
98
99
90
CLUSTER NUMBER
CLUSTER PROFILE
CLUSTER SPAM SCORE
LAST DISPATCH
MESSAGES TO SEND
CHALLENGE SENT
92
94
96
97
98
99


FIG. 11

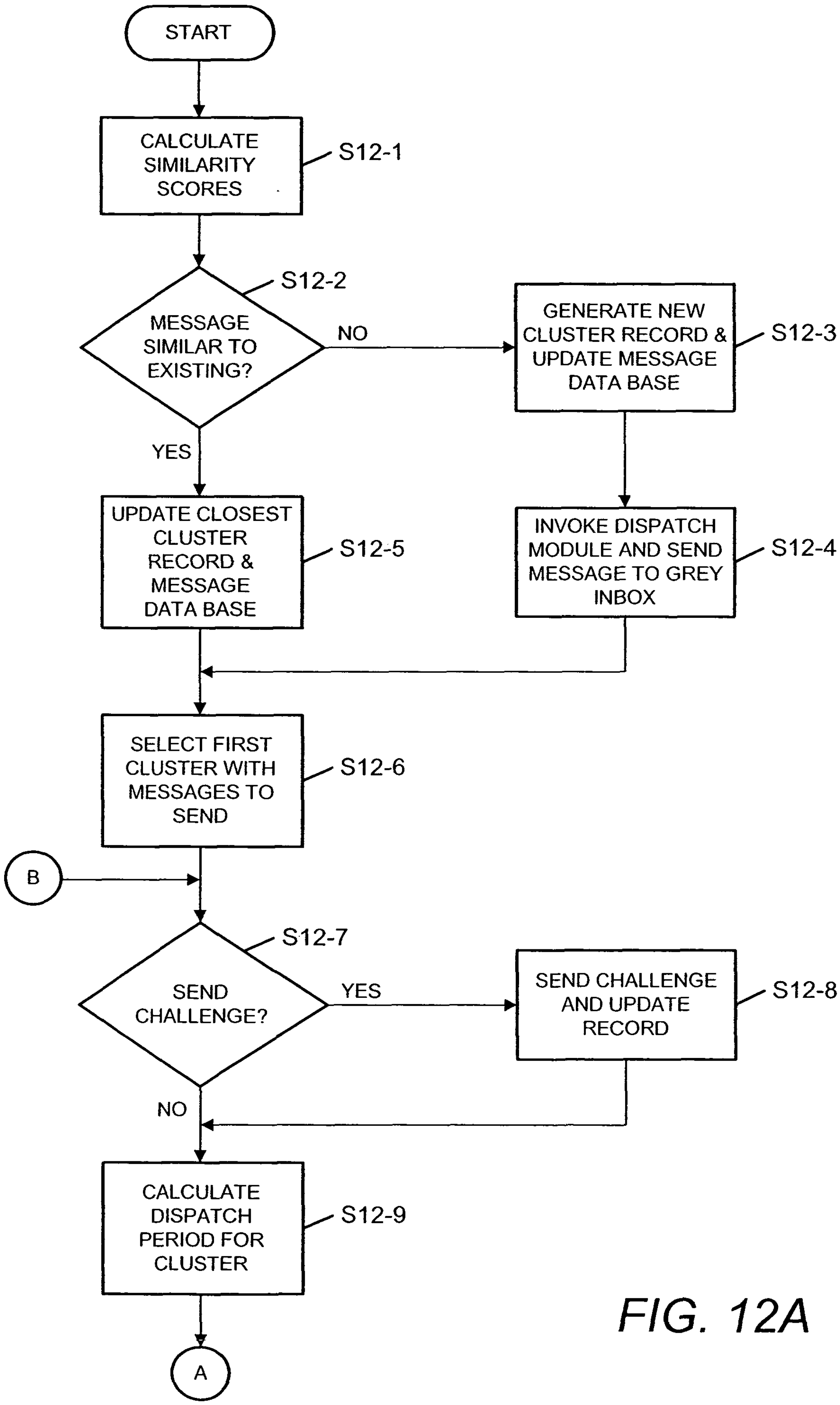
START
CALCULATE SIMILARITY SCORES
S12-1
MESSAGE SIMILAR TO EXISTING?
S12-2
NO
GENERATE NEW CLUSTER RECORD & UPDATE MESSAGE DATA BASE
S12-3
YES
UPDATE CLOSEST CLUSTER RECORD & MESSAGE DATA BASE
S12-5
INVOKE DISPATCH MODULE AND SEND MESSAGE TO GREY INBOX
S12-4
SELECT FIRST CLUSTER WITH MESSAGES TO SEND
S12-6
B
SEND CHALLENGE?
S12-7
YES
SEND CHALLENGE AND UPDATE RECORD
S12-8
NO
CALCULATE DISPATCH PERIOD FOR CLUSTER
S12-9
A

FIG. 12A

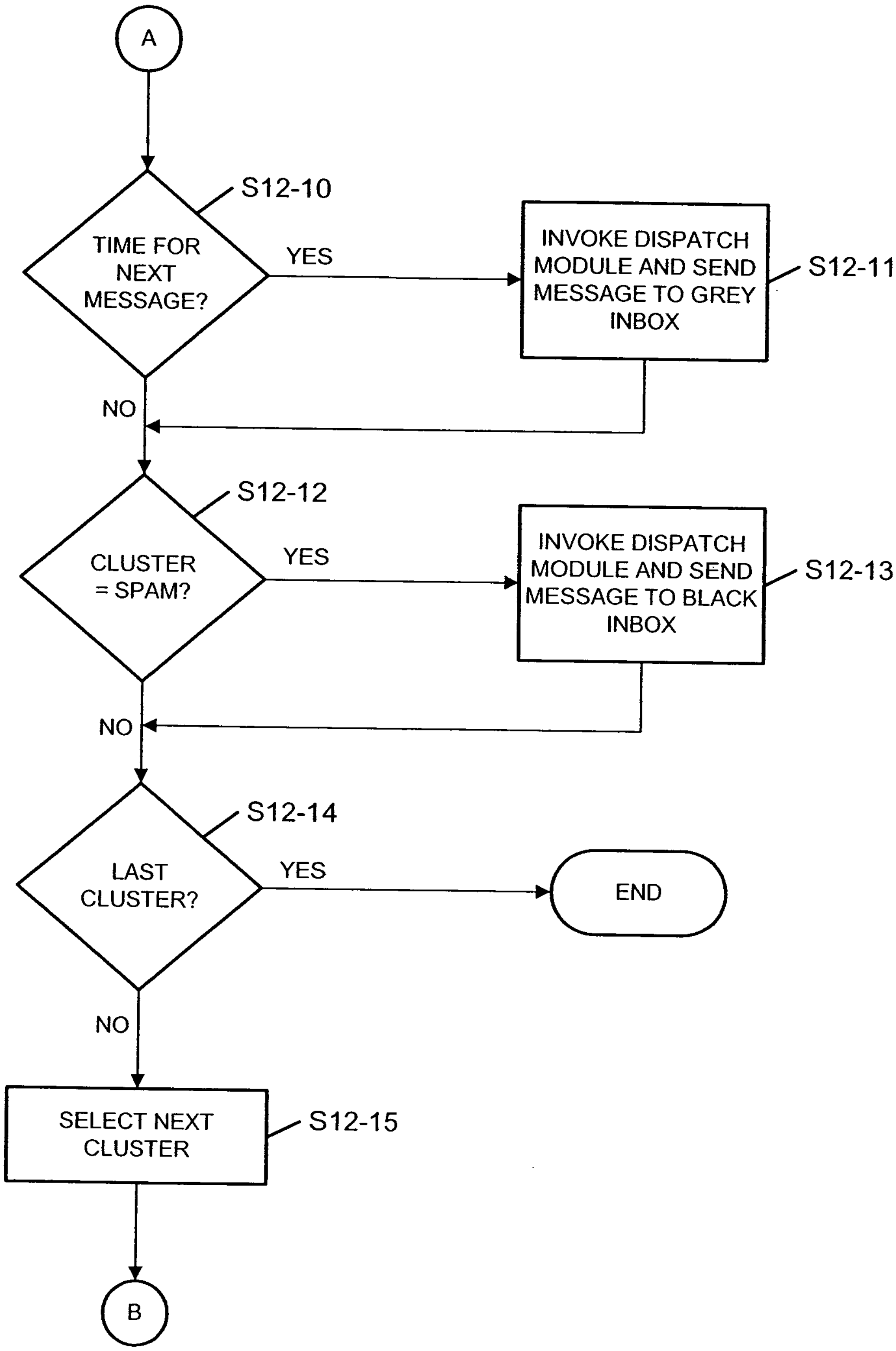
A
S12-10
TIME FOR NEXT MESSAGE?
YES
INVOKE DISPATCH MODULE AND SEND MESSAGE TO GREY INBOX
S12-11
NO
S12-12
CLUSTER = SPAM?
YES
INVOKE DISPATCH MODULE AND SEND MESSAGE TO BLACK INBOX
S12-13
NO
S12-14
LAST CLUSTER?
YES
END
NO
SELECT NEXT CLUSTER
S12-15
B

FIG. 12B

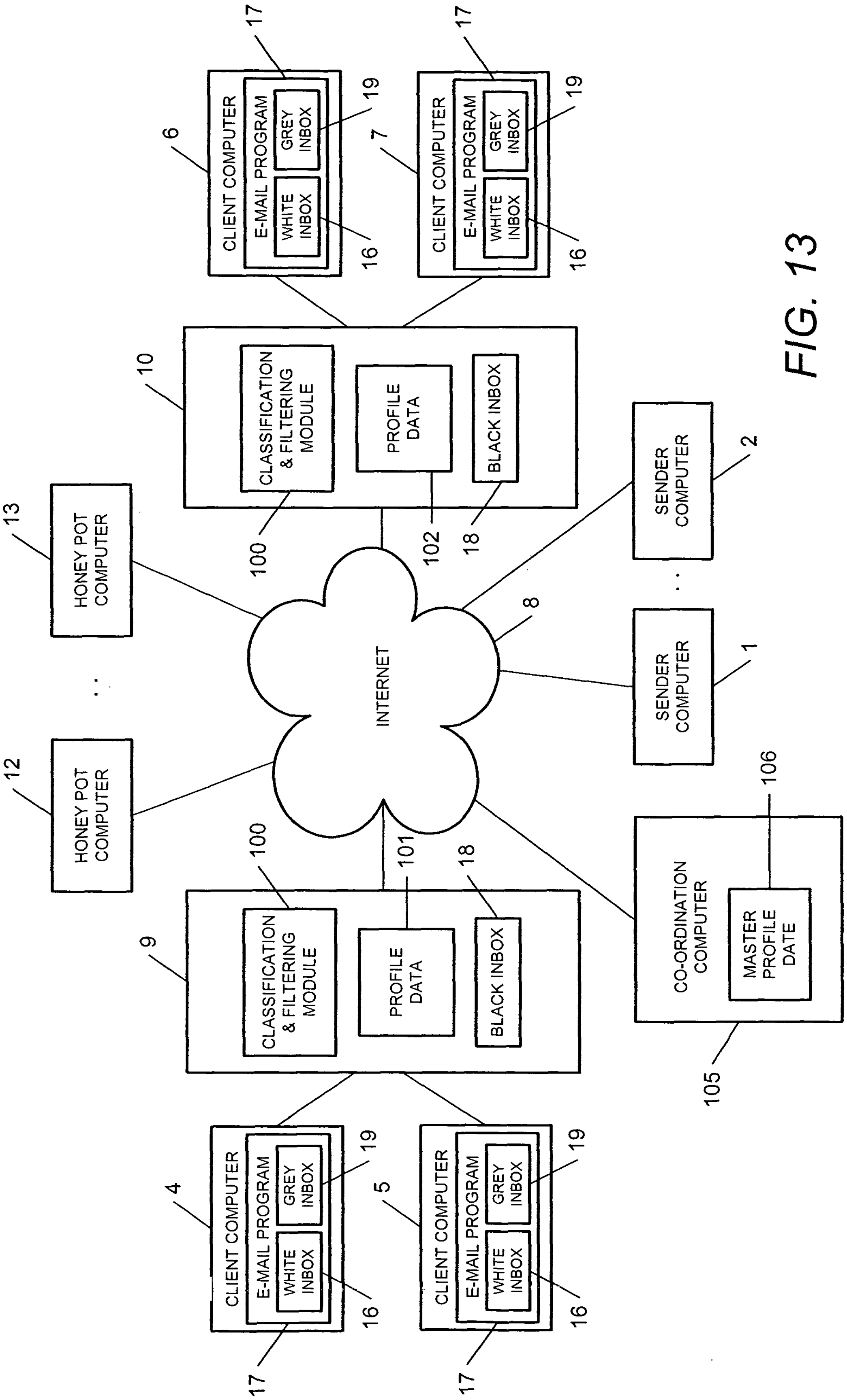
CLIENT COMPUTER
E-MAIL PROGRAM
WHITE INBOX
GREY INBOX
CLASSIFICATION & FILTERING MODULE
PROFILE DATA
BLACK INBOX
HONEY POT COMPUTER
INTERNET
SENDER COMPUTER
CO-ORDINATION COMPUTER
MASTER PROFILE DATE
1
2
4
5
6
7
8
9
10
12
13
16
17
18
19
100
101
102
105
106

FIG. 13